# EUROPÄISCHE PATENTSCHRIFT

(11) **EP 3 544 761 B1**
(45) Veröffentlichungstag und Bekanntmachung des Hinweises auf die Patenterteilung: **31.08.2022**
(21) Anmeldenummer: 17803832.9
(22) Anmeldetag: 09.11.2017
(51) Int. Cl.: B23K 26/03, G01J 5/00, G01J 5/20, G01J 5/60, B22F 3/105

(54) **BESTRAHLUNGSEINRICHTUNG UND BEARBEITUNGSMASCHINE DAMIT**
IRRADIATING DEVICE AND MACHINE TOOL COMPRISING SAME
DISPOSITIF D'EXPOSITION AUX RAYONNEMENTS ET MACHINE D'USINAGE POURVUE D'UN TEL DISPOSITIF D'EXPOSITION AUX RAYONNEMENTS

(30) Priorität: 23.11.2016 DE 102016223215
(43) Veröffentlichungstag der Anmeldung: 02.10.2019
(73) Patentinhaber: Trumpf Laser- und Systemtechnik GmbH, 71254 Ditzingen (DE)
(72) Erfinder: SCHAAL, Frederik, 70734 Fellbach (DE); ALLENBERG-RABE, Matthias, 70499 Stuttgart (DE); WUEST, Frank Peter, 71083 Herrenberg (DE)
(74) Vertreter: Kohler Schmid Möbus Patentanwälte
(86) Internationale Anmeldenummer: PCT/EP2017/078811
(87) Internationale Veröffentlichungsnummer: WO 2018/095743

(56) Entgegenhaltungen:
- EP-A1- 0 934 797
- US-A1- 2009 206 065
- US-A1- 2010 086 003

## Beschreibung

Die vorliegende Erfindung betrifft eine Bestrahlungseinrichtung zum Bestrahlen eines Bearbeitungsfelds mit einem Bearbeitungsstrahl, insbesondere mit einem Laserstrahl, für das Durchführen eines Schweißprozesses. Die Erfindung betrifft auch eine zugehörige Bearbeitungsmaschine zum Herstellen von dreidimensionalen Bauteilen durch Bestrahlen von Pulverschichten mittels eines Bearbeitungsstrahls, insbesondere mittels eines Laserstrahls, wobei die Bearbeitungsmaschine eine Bestrahlungseinrichtung wie weiter oben beschrieben aufweist, um die Pulverschichten in einem Bearbeitungsfeld zu bestrahlen.

Für die Qualitätsüberwachung und die Regelung eines Prozesses zur Herstellung von dreidimensionalen Bauteilen durch das Bestrahlen von (metallischen) Pulverschichten, die schichtweise mit einem Bearbeitungsstrahl, beispielsweise mit einem Laserstrahl, verschmolzen werden ("laser metal fusion", LMF), ist es erforderlich, den Schmelz- bzw. den Schweißprozess, insbesondere das Schmelzbad, das bei dem LMF-Prozess gebildet wird, zu überwachen. Die wichtigsten Kenngrößen hierfür sind die Temperaturen und die Temperaturgradienten beim Aufschmelzen und Erstarren der Schmelze, da diese die wesentlichen Bauteileigenschaften bestimmen. In der vorliegenden Anmeldung wird nicht zwischen einem Schweiß- und einem Sinterprozess unterschieden, vielmehr wird unter einem Schweißprozess auch ein Sinterprozess verstanden.

Diese Kenngrößen lassen sich mit herkömmlichen Sensoren zur Temperaturüberwachung in Form von Pyrometern oder in Form von Kameras nur unzureichend erfassen. Pyrometer sind optische Temperaturmessgeräte, die Wärmestrahlung aufnehmen, anhand derer die Temperatur bestimmt werden kann. Hierzu wird durch eine optische Abbildung die Wärmestrahlung aus einer Beobachtungsebene, im vorliegenden Fall der Bearbeitungsebene, auf ein Sensorelement, genauer gesagt auf eine Sensoroberfläche des Pyrometers abgebildet. Als Sensorelemente bzw. als Pyrometer werden üblicherweise Dioden verwendet, die nur einen Messpunkt bzw. nur eine Position in der Bearbeitungsebene erfassen und die eine hohe Empfindlichkeit, Messdynamik und Messrate besitzen. Beispielsweise kann bei derartigen Pyrometern ein Teil der Bearbeitungsebene bzw. ein Messfleck mit einem Durchmesser von 1 mm auf eine Diode abgebildet werden, wobei in diesem Fall die räumliche Auflösung bzw. der Messfleck deutlich größer ist als der Brennfleck (50 bis 100 µm). Zur flächenhaften Detektion werden Kameras verwendet, die typischerweise ein kartesisches Sensorarray bilden. Diese besitzen eine hohe räumliche Auflösung, aber nur eine niedrige Messrate, Messdynamik und Empfindlichkeit.

Für die Prozessüberwachung eines LMF-Prozesses sind durch die hohen Vorschubgeschwindigkeiten im Bereich von mehreren m/s Messraten im Bereich von 100 kHz notwendig. Die erforderliche Messdynamik ergibt sich durch die Unterschiede zwischen der Temperatur des Bauteils (~ 200°C) und der Temperatur der flüssigen Schmelze (~2000°C). Niedrige Temperaturen sind durch die geringe Intensität der Wärmestrahlung mit Hilfe von Pyrometrie schwieriger zu detektieren als hohe Temperaturen. Der gesamte Temperaturverlauf des Schweißprozesses um die Bearbeitungsposition herum kann daher mittels einer Kamera nicht bzw. nur unzureichend detektiert werden. Existierende Verfahren konzentrieren sich daher auf die Schmelzbadtemperatur und die Schmelzbadgeometrie, die aufgrund der hohen Temperaturen einfacher zu erfassen sind als Bereiche außerhalb des Schmelzbades, was aber für eine sinnvolle Regelung des Prozesses in der Regel nicht ausreichend ist. Für Prozesse mit geringen Vorschubgeschwindigkeiten (z.B. Laserschweißen) sind kamerabasierte Sensoren bekannt, die sich aber nicht auf die hohen Messraten für den LMF-Prozess übertragen lassen.

Aus der WO 2013/021173 A1 sind ein Verfahren und eine Vorrichtung zum selektiven Kombinieren von partikelförmigem Material bekannt geworden, bei denen Strahlung verwendet wird, um einen Teilbereich eines Schichtmaterials zu sintern und auf diese Weise einen dreidimensionalen Körper zu erzeugen. In einem Ausführungsbeispiel wird ein Sensor verwendet, um die Temperatur des gesinterten Teilbereichs zu bestimmen. Bei dem Sensor kann es sich um eine Infrarot-Kamera, um ein einzelnes Pyrometer oder um ein Array von Pyrometern handeln. Zur Bereitstellung der Strahlung kann eine Mehrzahl von Strahlungsquellen dienen. Auch können ein Filter oder mehrere Filter bereitgestellt werden, um die von zumindest manchen der Mehrzahl von Strahlungsquellen erzeugte Strahlung zu filtern.

In der EP 3 023 757 A1 ist eine pyrometrische Detektionsvorrichtung zur Verwendung in einer Vorrichtung zur Herstellung dreidimensionaler Werkstücke bekannt geworden, wobei die Detektionseinrichtung zum Empfangen von thermischer Strahlung ausgebildet ist. Die pyrometrische Detektionseinrichtung kann einen ersten optischen Sensor und einen zweiten optischen Sensor aufweisen, wobei der erste und zweite optische Sensor konfiguriert sind, ein elektrisches Signal abzugeben, welches von einer Intensität der thermischen Strahlung in einem spezifischen Wellenlängenbereich abhängig ist. Optische Filter und/oder wellenlängenabhängige Strahlteiler können verwendet werden, um die einfallende thermische Strahlung in dem gewünschten Wellenlängenbereich zu einem jeweiligen Detektor zu leiten. Ein die Temperatur an der Emissionsstelle anzeigender Wert kann berechnet werden, indem ein Verhältnis zwischen dem elektrischen Signal des ersten optischen Sensors und dem elektrischen Signal des zweiten optischen Sensors berücksichtigt wird.

In der US 2010/086003 A1 (Basis für den Oberbegriff des Anspruchs 1) ist ein Verfahren zum Erkennen von Fehlern an einer Schweißnaht während eines Laser-Schweißprozesses beschrieben, umfassend: zweidimensional ortsaufgelöstes Detektieren von Strahlung, die von einer sich an ein flüssiges Schmelzbad anschließenden, erstarrten Schmelze emittiert wird. Zur Bestimmung der Lage einer Grenze zwischen erstarrter Schmelze und flüssigem Schmelzbad kann zusätzlich ein ortsaufgelöstes Detektieren von Strahlung erfolgen, die von dem flüssigen Schmelzbad emittiert wird. Zum ortsaufgelösten Detektieren der Strahlung kann beispielsweise eine Quotientenpyrometrie-Messapparatur eingesetzt werden.

### Aufgabe der Erfindung

Der Erfindung liegt die Aufgabe zugrunde, eine Bestrahlungseinrichtung und eine Bearbeitungsmaschine mit einer solchen Bestrahlungseinrichtung bereitzustellen, die eine verbesserte Überwachung eines Schweißprozesses ermöglichen.

### Gegenstand der Erfindung

Diese Aufgabe wird erfindungsgemäß durch eine Bestrahlungseinrichtung der eingangs genannten Art gelöst, umfassend: eine Scannereinrichtung zum Ausrichten des Bearbeitungsstrahls auf eine Bearbeitungsposition in dem Bearbeitungsfeld, eine Abbildungseinrichtung zur Abbildung eines Teilbereichs des Bearbeitungsfeldes auf ein Pyrometer, das mindestens zwei Pyrometer-Segmente aufweist, wobei die Abbildungseinrichtung Wärmestrahlung, die von der Bearbeitungsposition in dem Bearbeitungsfeld ausgeht, auf ein erstes Pyrometer-Segment abbildet, und wobei die Abbildungseinrichtung Wärmestrahlung, die von einer Position in dem Bearbeitungsfeld ausgeht, die sich entlang einer Vorschubrichtung des Bearbeitungsstrahls in dem Bearbeitungsfeld vor oder hinter der Bearbeitungsposition befindet, auf mindestens ein zweites Pyrometer-Segment abbildet, wobei das erste Pyrometer-Segment und/oder das zweite Pyrometer-Segment mindestens eine gekrümmte Außenkante aufweisen. Die Abbildungseinrichtung kann ggf. einen Teil des Pyrometers bilden, dies ist aber nicht zwingend erforderlich. Bei der Abbildungseinrichtung handelt es sich im einfachsten Fall um eine Linse. Die Pyrometer-Segmente weisen mindestens eine gekrümmte Außenkante auf, d.h. diese weichen von einer rechteckigen bzw. quadratischen Geometrie ab, um die Detektion der Wärmestrahlung zu verbessern.

Das bei der hier beschriebenen Bestrahlungseinrichtung verwendete Pyrometer weist mindestens zwei Pyrometer-Segmente auf, und zwar typischer Weise ein erstes Pyrometer-Segment sowie eine Mehrzahl von zweiten Pyrometer-Segmenten, welche die berührungslose Erfassung der Temperatur an mehreren Positionen in dem Bearbeitungsfeld und aufgrund der erforderlichen hohen Messrate von mehr als ca. 100 kHz die Überwachung des Schweißprozesses in Echtzeit ermöglichen. Die Abbildungseinrichtung bildet zu diesem Zweck einen Teilbereich des Bearbeitungsfeldes, welcher die momentane Bearbeitungsposition bzw. den Brennfleck enthält, auf das Pyrometer ab. Der abgebildete, nicht zwingend kreisförmige Teilbereich des Bearbeitungsfeldes kann beispielsweise einen Durchmesser von ca. 2 bis ca. 10 mm aufweisen. Die Abbildungseinrichtung weist optische Komponenten bzw. Beschichtungen auf, die eine ausreichende Transmission für den von dem Pyrometer erfassten Wellenlängenbereich, typischerweise den NIR-Wellenlängenbereich, aufweisen. Die Abbildungseinrichtung sollte zudem ausgebildet sein, feldabhängige und chromatische Aberrationen zu verringern. An einem jeweiligen Pyrometer-Segment wird die gesamte auftreffende Wärmestrahlung integral erfasst, d.h. ein jeweiliges Pyrometer-Segment stellt einen Flächenbereich dar, an dem die Wärmestrahlung typischerweise nicht ortsaufgelöst erfasst werden kann.

Mit Hilfe des weiter oben beschriebenen Pyrometers können insbesondere die nachfolgend angegebenen Temperaturen in der Umgebung des Bearbeitungsstrahls erfasst werden: Die Pulvertemperatur in Vorschubrichtung vor der Bearbeitungsposition und somit die Pulveraufheizung bzw. das Aufheizen des Bauteils, der Temperaturgradient beim Pulveraufschmelzen, der charakteristisch ist für die effektive Leistung des Bearbeitungsstrahls, beispielsweise eines Laserstrahls, während des Prozesses, sowie die Abkühlrate (Mikrostruktur des Gefüges, Materialeigenschaften, Eigenspannungen, etc.).Bei einer ausreichend großen Anzahl von zweiten Pyrometer-Segmenten können Temperaturen bzw. Temperaturgradienten in der Umgebung des Bearbeitungsstrahls nicht nur entlang der Vorschubrichtung, sondern auch in anderen Richtungen, z.B. quer zur Vorschubrichtung, bestimmt werden. Beispielsweise kann beim flächigen Aufschmelzen des Pulverbetts, bei dem mehrere Wärmespuren erzeugt werden, die benachbart und parallel zueinander verlaufen, mit Hilfe von zweiten Pyrometer-Segmenten, die sich im Wesentlichen seitlich zur Vorschubrichtung erstrecken, zusätzlich zu einer Auswertung der momentan erzeugten Wärmespur auch Wärmestrahlung von den noch nicht vollständig abgekühlten benachbarten Wärmespuren detektiert bzw. abgebildet werden. Auf diese Weise können Temperaturgradienten bzw. es kann die Abkühlrate auch in den benachbarten, zuletzt bestrahlten Wärmespuren detektiert werden, d.h. über längere Zeiträume als im direkten Vor- bzw. Nachlauf zur Bearbeitungsposition. Das hier beschriebene Pyrometer bzw. die Bestrahlungseinrichtung lässt sich nicht nur für die Überwachung von Schweißprozessen in Bearbeitungsmaschinen zum Herstellen von dreidimensionalen Bauteilen sondern auch bei anderen Schweißprozessen, beispielsweise bei Laserschweißprozessen zur Bearbeitung von insbesondere plattenförmigen, metallischen Werkstücken oder zur Überwachung von anderen Hochtemperaturprozessen einsetzen.

Bei einer Ausführungsform sind das erste Pyrometer-Segment und das mindestens eine zweite Pyrometer-Segment an der Oberfläche einer segmentierten Diode gebildet oder das erste Pyrometer-Segment und das mindestens eine zweite Pyrometer-Segment stehen über eine jeweilige Strahlungstransporteinrichtung mit einer Diode in Verbindung. Durch die Verwendung von auf die hier beschriebene Weise ausgebildeten Pyrometern zur Detektion der Wärmestrahlung kann diese mit höherer Messrate, Messdynamik und Empfindlichkeit als bei einer Kamera erfasst werden. Die Pyrometer-Segmente können an einer segmentierten Diode realisiert werden, indem die Oberfläche der Diode in verschiedene elektrisch isolierte Segmente unterteilt wird. Für die Unterteilung können für die Herstellung von Dioden bekannte Mikrostrukturierungsprozesse verwendet werden, beispielsweise analog zur Herstellung von Quadrantendioden. Durch dünne Leiterbahnen kann in diesem Fall die elektrische Kontaktierung zum Rand der Diode und von dort mittels Drahtbonden auf eine Platine oder auf ein Gehäuse geführt werden. Die Kontaktierung der Rückseite der Diode ermöglicht die Realisierung einer gemeinsamen Anode oder Kathode. Die jeweiligen Signale der Pyrometer-Segmente der segmentierten Diode können durch entsprechende AD-Wandler digitalisiert und an eine Auswerte-/Regeleinheit weitergeleitet werden. Bei der Verwendung einer segmentierten Diode können mit Hilfe der Mikrostrukturierung der Diodenoberfläche zahlreiche und komplex geformte Dioden- bzw. Pyrometer-Segmente hergestellt werden. Um die Lichtempfindlichkeit der Pyrometer-Segmente zu maximieren und die Auswerteeinrichtung zu entlasten, sollte die Anzahl der Pyrometer-Segmente jedoch nicht zu groß gewählt werden.

Alternativ zur Realisierung der Pyrometer-Segmente an der Oberfläche einer segmentierten Diode können die Pyrometer-Segmente auf einer gemeinsamen Grundplatte angeordnet sein und über eine jeweilige Strahlungstransporteinrichtung mit einer Diode oder mit einem anderen wärmeempfindlichen Sensor in Verbindung stehen. In diesem Fall kann ein räumlich getrenntes Auffangen der Wärmestrahlung mittels mehrerer Strahlungstransporteinrichtungen in Form von geometrisch geeignet angeordneten Lichtleitkegeln, beispielsweise basierend auf Reflexion, Totalreflexion, Brechung oder diffraktiven Optiken, hin zu herkömmlichen Dioden oder zu anderen wärmeempfindlichen Sensoren erfolgen. Gegebenenfalls können die Pyrometer-Segmente die Enden von geeignet angeordneten sowie geometrisch geeignet geformten Lichtwellenleitern bilden, die an einer gemeinsamen Grundplatte angeordnet sind und die zum räumlich getrennten Auffangen und Weiterleiten der Wärmestrahlung zu fasergekoppelten (Standard-)Dioden oder anderen wärmeleitenden Sensoren dienen.

Um die Temperaturen bei einem Schweißprozess, speziell bei einem LMF-Prozess, zu detektieren, hat es sich als günstig erwiesen, wenn strukturierte Diode(n) bzw. herkömmliche Dioden mit Empfindlichkeiten im Wellenlängenbereich von 1,5 µm bis 2,2 µm verwendet werden, beispielsweise InGaAs-Dioden.

Bei einer weiteren Ausführungsform umfasst die Bestrahlungseinrichtung zusätzlich eine zwischen dem Bearbeitungsfeld und dem ersten Pyrometer-Segment und/oder mindestens einem zweiten Pyrometer-Segment angeordnete Filtereinrichtung zur insbesondere wellenlängenabhängigen Abschwächung der Intensität der von dem Bearbeitungsfeld ausgehenden Wärmestrahlung. Die Verwendung einer wellenlängenselektiven Filtereinrichtung, welche die Intensität der Wärmestrahlung reduziert, bevor diese auf das erste Pyrometer-Segment auftrifft, ermöglicht es, mit dem ersten Pyrometer-Segment direkt die Wärmestrahlung an der Bearbeitungsposition zu detektieren. Gegebenenfalls können zwischen dem mindestens einen zweiten Pyrometer-Segment und dem Bearbeitungsfeld weitere, die Wärmestrahlung typischerweise weniger stark abschwächende Filtereinrichtungen angeordnet werden, um die Wärmestrahlung von abkühlendem bzw. noch zu schweißendem Material zu detektieren. Es versteht sich, dass insbesondere bei den zweiten Pyrometer-Segmenten nicht notwendigerweise eine Filtereinrichtung verwendet werden muss, um die Wärmestrahlung zu filtern. Durch die Verwendung von Filtereinrichtungen zur Filterung der Wärmestrahlung, die individuell einzelnen Pyrometer-Segmenten zugeordnet sind, kann auf günstige Weise die erforderliche Messdynamik für den zu überwachenden Temperaturbereich zwischen ca. 300°C und ca. 2000°C realisiert werden.

Die Filtereinrichtung für ein einzelnes Pyrometer-Segment kann als wellenlängenabhängiger Bandpassfilter ausgebildet sein. Der Bandpassfilter kann insbesondere für mindestens zwei unterschiedliche Wellenlängen durchlässig sein, so dass die Wärmestrahlung bei mindestens zwei sich ausreichend voneinander unterscheidenden Wellenlängen detektiert werden kann. Dies ist günstig, da sich bei der Einwellenlängen-Pyrometrie, bei der die Wärmestrahlung im Wesentlichen bei einer Wellenlänge bestimmt wird, die absolute Temperatur nur bei Kenntnis der Emissivität des Werkstücks bestimmen lässt. Da beim LMF-Prozess Phasenumwandlungen (Pulver, Schmelze, Erstarrung) stattfinden, ist die jeweilige Emissivität in der Regel unbekannt. Durch die Mehrwellenlängen-Pyrometrie lässt sich die Temperatur ohne eine Emissivitäts-Konstante bestimmen. Mehrwellenlängen-Pyrometer werden üblicherweise durch die Aufteilung des Beobachtungs-Strahlengangs mit Hilfe von Bandpass-Strahlteilern realisiert. Bei dem hier vorgeschlagenen Pyrometer kann/können die Filtereinrichtung(en) bei Pyrometer-Segmenten, die an der Oberfläche einer Diode oder ggf. einer gemeinsamen Grundplatte gebildet sind, durch das direkte Aufbringen einer Beschichtung auf die Pyrometer-Segmente realisiert werden. Bei geeigneter Auslegung der Eigenschaften der jeweiligen Filtereinrichtung kann die Wärmestrahlung bzw. das entsprechende Signal daher je Pyrometer-Segment bzw. je Messpunkt bei mehreren Wellenlängen aufgenommen werden, um eine direkte Bestimmung der Temperatur zu ermöglichen.

Bei einer weiteren Ausführungsform weisen mindestens zwei der Pyrometer-Segmente an der Oberfläche der strukturierten Diode oder mindestens zwei der über eine jeweilige Strahlungstransporteinrichtung mit unterschiedlichen Pyrometer-Segmenten verbundenen Detektoren, insbesondere in Form von Dioden, eine unterschiedliche wellenlängenabhängige Empfindlichkeit für die von dem Bearbeitungsfeld ausgehende Wärmestrahlung auf. Die Pyrometer-Segmente selbst oder die mit einem jeweiligen Pyrometer-Segment verbundenen Detektoren, insbesondere in Form von Dioden, können aus unterschiedlichen Materialien hergestellt sein, die eine jeweils unterschiedliche wellenlängenabhängige Empfindlichkeit für die auftreffende Wärmestrahlung aufweisen. Insbesondere können die Detektoren bzw. die Pyrometer-Segmente der strukturierten Diode eine jeweils unterschiedliche Maximums-Wellenlänge aufweisen, bei der die Empfindlichkeit für die auftreffende Wärmestrahlung maximal ist. Dies ist günstig, da wie oben beschrieben wurde der Temperaturbereich, in dem Wärmestrahlung detektiert werden soll, zwischen ca. 200°C und ca. 2000°C liegt, was einer Verschiebung des Emissions-Maximums der Wärmestrahlung von ca. 1-5 µm entspricht. Eine Anpassung des Materials des Detektors bzw. der Diode bzw. der Pyrometer-Segmente der segmentierten Diode an die Wellenlänge des Emissions-Maximums der Wärmestrahlung, die auf das jeweils zugehörige Pyrometer-Segment abgebildet wird, kann die Signalqualität bei der Detektion der Wärmestrahlung signifikant verbessern. Hierbei kann ausgenutzt werden, dass Dioden je nach Art des verwendeten (Halbleiter-)Materials eine unterschiedliche wellenlängenabhängige Empfindlichkeit aufweisen. Sind die Pyrometer-Segmente an der Oberfläche einer segmentierten Diode gebildet, können unterschiedliche Halbleiter-Materialien in Form von Diodenplättchen aneinander gebondet werden. Sind die Pyrometer-Segmente an einer gemeinsamen Oberfläche angeordnet und über eine jeweilige Strahlungstransporteinrichtung z.B. in Form von Lichtwellenleitern mit einem jeweiligen Detektor verbunden, können Detektortypen mit unterschiedlicher wellenlängenabhängiger Empfindlichkeit bzw. unterschiedliche Arten von Dioden bzw. von Dioden-Materialien verwendet werden.

Bei einer Weiterbildung weist das erste Pyrometer-Segment der strukturierten Diode oder der mit dem ersten Pyrometer-Segment verbundene Detektor eine maximale Empfindlichkeit bei einer Maximums-Wellenlänge auf, die kleiner ist als die Maximums-Wellenlänge mindestens eines der zweiten Pyrometer-Segmente der strukturierten Diode oder mindestens eines mit einem zweiten Pyrometer-Segment verbundenen Detektors. Wie weiter oben beschrieben wurde, wird auf unterschiedliche Pyrometer-Segmente je nach deren Anordnung auf der Pyrometer-Oberfläche Wärmestrahlung aus unterschiedlichen Temperaturbereichen abgebildet. Auf das erste Pyrometer-Segment wird Wärmestrahlung mit den größten Temperaturen und somit mit einem Emissions-Maximum bei den kleinsten Wellenlängen abgebildet. Daher ist es günstig, wenn die Maximums-Wellenlänge des ersten Pyrometer-Segments bzw. des mit diesem verbundenen Detektors kleiner ist als die Maximums-Wellenlänge(n) der zweiten Pyrometer-Segmente. Für den Fall, dass die zweiten Pyrometer-Segmente in mehreren Ringsegmenten um das zentrale erste Pyrometer-Segment angeordnet sind, nimmt die Temperatur der auftreffenden Wärmestrahlung mit zunehmendem Abstand zum zentralen ersten Pyrometer-Segment ab. Entsprechend kann es alternativ oder zusätzlich zur oben beschriebenen Maßnahme günstig sein, für zweite Pyrometer-Segmente, die in einem weiter außen liegenden Ringbereich angeordnet sind, Materialien zu verwenden, bei denen die Maximums-Wellenlänge bei größeren Wellenlängen liegt als bei zweiten Pyrometer-Segmenten, die in einem weiter innen liegenden Ringbereich angeordnet sind.

Bei einer weiteren Ausführungsform weisen das erste Pyrometer-Segment und/oder das zweite Pyrometer-Segment eine Außenkontur mit mindestens kreisbogenförmigen Kante auf. Wie weiter oben beschrieben wurde, können die Pyrometer-Segmente von einer rechteckigen bzw. quadratischen Geometrie abweichen, um die Detektion der Wärmestrahlung zu verbessern. Auf diese Weise kann die Anzahl der Pyrometer-Segmente pro Flächeneinheit und die Auswerteeinrichtung bzw. die Auswerteelektronik derartig gestaltet werden, dass für den LMF-Prozess Pyrometerdaten mit ausreichend hoher Messrate, Dynamik, Empfindlichkeit und räumlicher Auflösung erzeugt werden. Zusätzlich kann auf diese Weise auch die Datenrate reduziert werden.

Bei einer weiteren Ausführungsform ist das erste Pyrometer-Segment kreisförmig. Dies ist günstig, um nur die Wärmestrahlung des in der Regel ebenfalls kreisförmigen Brennflecks detektieren zu können. Die Abbildungseinrichtung ist typischerweise derart ausgebildet, dass die Dimension bzw. der Durchmesser des Brennflecks (unter Berücksichtigung des Abbildungsmaßstabs) ungefähr dem Durchmesser des ersten Pyrometer-Segments entspricht. Auf diese Weise wird erreicht, dass die zweiten Pyrometer-Segmente die Wärmestrahlung außerhalb des Brennflecks detektieren können.

Bei einer weiteren Ausführungsform weist das Pyrometer mindestens zwei zweite Pyrometer-Segmente auf, die als Ringsegmente ausgebildet sind. Bei einem Schweißprozess, insbesondere bei einem LMF-Prozess, wird der Bearbeitungsstrahl in der Bearbeitungsebene in alle Richtungen verfahren bzw. gedreht, so dass sich die Wärmespur bzw. das Schmelzbad im Sichtfeld, d.h. in dem mittels der Abbildungseinrichtung abgebildeten Teilbereich des Bearbeitungsfeldes, dreht. Um zwischen Wärmestrahlung, die von einer Position in Bearbeitungsrichtung vor der Bearbeitungsposition ausgeht und Wärmestrahlung, die von einer Position in Bearbeitungsrichtung hinter der Bearbeitungsposition ausgeht, zu unterscheiden, genügt - sofern der Verfahrweg im Sichtfeld des Pyrometers näherungsweise als linear angenommen werden kann - eine Diskriminierung der Pyrometer-Segmente um 180°, d.h. es ist ausreichend, zwei Ringsegmente zu verwenden, die sich jeweils in Umfangsrichtung über einen Winkelbereich von ca. 180° erstrecken und die unmittelbar aneinander angrenzen. Sofern die Vorschubrichtung mit dem Trennsteg bzw. der Grenze zwischen den beiden Pyrometer-Segmenten zusammenfällt, führt dieses Vorgehen allerdings dazu, dass die beiden unmittelbar benachbarten ringförmigen Pyrometer-Segmente beide mit Wärmestrahlung beaufschlagt werden, was das Messergebnis verfälscht.

Um eine zuverlässige Diskriminierung der Wärmestrahlung, die von einer Position vor der Bearbeitungsposition ausgeht, von Wärmestrahlung, die von einer Position hinter der Bearbeitungsposition ausgeht, vorzunehmen, sind daher mindestens drei Pyrometer-Segmente erforderlich, die beispielsweise als Ringbereiche ausgebildet sein können, die sich über einen Winkelbereich von ca. 120° erstrecken, es können aber auch vier Pyrometer-Segmente verwendet werden, die sich über einen Winkelbereich von ca. 90° erstrecken. Eine höhere Anzahl an Pyrometer-Segmenten bzw. Zonen ermöglicht eine höhere räumliche Aufteilung bzw. Auflösung und damit auch das Trennen der Temperatursignaturen von beim LMF-Prozess erzeugten Wärmespuren, die benachbart zur momentan erzeugten Wärmespur verlaufen und die noch nicht hinreichend stark abgekühlt sind, so dass diese ebenfalls Wärmestrahlung abgeben. Bei der Auslegung des Layouts und der Anzahl der Segmente des Pyrometers muss zwischen räumlicher Auflösung, Empfindlichkeit und Komplexität der Auswertung ein Ausgleich gefunden werden.

Bei einem LMF-Prozess kann auch das Pulverbett bzw. die Pulverschicht vor der Bearbeitungsposition bzw. dem Brennfleck aufgeheizt werden, wenn es in der darunter liegenden Pulverschicht einen Schmelzprozess gab, oder weil die Bearbeitungskammer auf eine möglichst hohe Temperatur vorgeheizt wird, um möglichst geringe Spannungen in dem herzustellenden dreidimensionalen Bauteil zu erzeugen. Durch die Unterscheidung zwischen Wärmestrahlung, die von einer Position vor der Bearbeitungsposition und einer Position nach der Bearbeitungsposition ausgeht, können sowohl die Temperatur in dem Pulverbett vor dem Prozess bzw. vor der Bearbeitungsposition als auch die Temperatur bzw. die Abkühlrate nach dem Prozess, d.h. nach der Bearbeitungsposition, bestimmt werden.

Bei einer weiteren Ausführungsform sind die als Ringsegmente ausgebildeten zweiten Pyrometer-Segmente drehsymmetrisch um das erste Pyrometer-Segment angeordnet. Wie weiter oben beschrieben wurde, dreht sich die Wärmespur bei LMF-Prozessen in alle Richtungen, so dass eine rotationssymmetrische Anordnung der Pyrometer-Segmente vorteilhaft ist. Da die Bearbeitungsposition bzw. der Brennfleck in der Regel stets auf das erste Pyrometer-Segment abgebildet wird, welches ortsfest im Zentrum des Pyrometers bzw. der Pyrometer-Fläche angeordnet ist, an der die Pyrometer-Segmente gebildet sind, können mittels der umliegenden zweiten Pyrometer-Segmente u.a. die Geometrie und die Fläche des Schmelzbades bestimmt werden. Durch die hohe Temperatur im Brennfleck und das daraus resultierende starke thermische Signal können die zweiten Pyrometer-Segmente in diesem Fall auch mit vergleichsweise kleinem Flächeninhalt ausgebildet werden.

Bei einer weiteren Ausführungsform sind die zweiten Pyrometer-Segmente in mehreren konzentrischen Ringen angeordnet. Die Verwendung von mehreren konzentrischen Ringen ermöglicht es, die Wärmestrahlung bzw. die Temperatur an in mehreren in unterschiedlichen Abständen zur Bearbeitungsposition angeordneten Positionen innerhalb des Bearbeitungsfelds zu bestimmen und dadurch die Ortsauflösung bei der Bestimmung der Temperatur bzw. der Temperaturgradienten zu erhöhen.

Bei einer Ausführungsform ist das Pyrometer in einem koaxial zum Bearbeitungsstrahl verlaufenden Beobachtungsstrahlengang angeordnet, d.h. der Beobachtungsstrahlengang und der Bearbeitungsstrahl verlaufen koaxial zueinander (und in entgegengesetzter Richtung), bis der Beobachtungsstrahlengang aus dem Bearbeitungsstrahl ausgekoppelt wird. Die Auskopplung kann beispielsweise an einem Strahlteiler erfolgen, wobei der Strahlteiler typischerweise zwischen der Scannereinrichtung und dem Pyrometer angeordnet ist. Auf diese Weise verläuft der Beobachtungsstrahlengang stets über die Scannereinrichtung, unabhängig davon, an welche Bearbeitungsposition der Bearbeitungsstrahl von der Scannereinrichtung ausgerichtet wird. Auf diese Weise wird das Messfeld, d.h. der auf das Pyrometer abgebildete Teilbereich des Bearbeitungsfeldes, mit der Bearbeitungsposition verfahren werden, d.h. es wird unabhängig von der Bearbeitungsposition in dem Bearbeitungsfeld die Wärmestrahlung von der Bearbeitungsposition auf das erste Pyrometer-Segment abgebildet.

Bei einer weiteren Ausführungsform umfasst die Bestrahlungseinrichtung eine Steuer- und/oder Regeleinrichtung zur Vorgabe der Vorschubrichtung bei der Bewegung des Bearbeitungsstrahls über das Bearbeitungsfeld. Wie weiter oben beschrieben wurde, wird der Bearbeitungsstrahl mittels der Scannereinrichtung an unterschiedliche Bearbeitungspositionen auf dem Bearbeitungsfeld geführt, wobei die momentane Scanrichtung und somit die Vorschubrichtung in dem Bearbeitungsfeld typischerweise ortsabhängig variiert, und zwar in Abhängigkeit von dem herzustellenden dreidimensionalen Bauteil. Es versteht sich, dass die Steuer- und/oder Regeleinrichtung auch andere Parameter des LMF-Prozesses, beispielsweise die Intensität des Bearbeitungsstrahls und somit die Temperatur an der Bearbeitungsposition steuert bzw. regelt.

Bei einer weiteren Ausführungsform umfasst die Bestrahlungseinrichtung eine Auswerteeinrichtung, die ausgebildet ist, anhand der vorgegebenen Vorschubrichtung zweite Pyrometer-Segmente zu identifizieren, die in Vorschubrichtung vor oder hinter der Bearbeitungsposition angeordnet sind. Wie weiter oben beschrieben wurde, wird der Bearbeitungsstrahl in der Bearbeitungsebene in alle Richtungen verfahren bzw. gedreht, so dass sich die Wärmespur bzw. das Schmelzbad im Sichtfeld bzw. in dem mittels der Abbildungseinrichtung abgebildeten Teilbereich des Bearbeitungsfeldes dreht. Bei der Verwendung von zweiten Pyrometer-Segmenten, die z.B. als Ringsegmente ausgebildet sind, befindet sich bei einer vorgegebenen Vorschubrichtung typischerweise nur ein einziges Pyrometer-Segment des jeweiligen Ringes in Vorschubrichtung vor der Bearbeitungsposition und nur ein einziges Ringsegment in Vorschubrichtung hinter der Bearbeitungsposition. Es versteht sich, dass zusätzlich zu den Pyrometer-Segmenten, die sich in Vorschubrichtung vor bzw. hinter der Bearbeitungsposition befinden, ggf. weitere zweite Pyrometer-Segmente ausgewertet werden können, um weitere Temperaturwerte zu bestimmen und auf diese Weise die Ortsauflösung bei der Bestimmung der Temperatur zu erhöhen. Bei einer weiteren Ausführungsform ist die Auswerteeinrichtung zur Bestimmung einer Temperatur an der Bearbeitungsposition, einer Temperatur an einer Position in dem Bearbeitungsfeld vor der Bearbeitungsposition und/oder an einer Position in dem Bearbeitungsfeld hinter der Bearbeitungsposition und bevorzugt zur Bestimmung mindestens eines Temperaturgradienten anhand von mindestens zwei der Temperaturen ausgebildet. Die Bestimmung der Temperatur bzw. von Temperaturgradienten ermöglicht es, folgende zusätzliche Informationen über den LMF-Prozess zu erhalten: Die Pulvertemperatur in Vorschubrichtung vor der Bearbeitungsposition, d.h. die Pulveraufheizung bzw. das Aufheizen des Bauteils durch den LMF-Prozess, den Gradienten beim Pulveraufschmelzen, d.h. die effektive Leistung im LMF-Prozess, die Temperatur im Schmelzbad (Überhitzung) sowie die Abkühlrate, d.h. die Mikrostruktur des Gefüges, die Materialeigenschaften sowie die Eigenspannungen des Materials. Diese Informationen können sowohl zur Beurteilung des Bearbeitungsergebnisses (Prozessmonitoring) als auch zur Prozessregelung verwendet werden. Beispielsweise kann durch die Messung der Pulvertemperatur vor der Bearbeitungsposition die Leistung des Bearbeitungsstrahls bzw. des Laserstrahls rechtzeitig angepasst werden. Hierdurch können Inhomogenitäten der Pulvervorheizung sowie das ungleichmäßige Bauteilaufheizen (z.B. durch Querschnittsänderungen) korrigiert werden. Durch Betrachten der Abkühlrate bzw. der gesamten thermischen Historie des Bauteils kann z.B. die Entstehung von Eigenspannungen und die Homogenität des Prozesses beurteilt werden. Auch eine Messung der lokalen Pulvervorheizung bei geringen Temperaturen von ca. 300°C und darüber ist möglich. Auch kann auf diese Weise eine Trennung der Einflüsse der Wärmeleitung, der eingebrachten Strahlungsleistung sowie der Scan- bzw. Vorschubgeschwindigkeit vorgenommen werden.

Bei einer weiteren Ausführungsform ist die Steuer- und/oder Regeleinrichtung ausgebildet, die Leistung des Bearbeitungsstrahls in dem Bearbeitungsfeld und/oder die Vorschubgeschwindigkeit anhand der mindestens einen von der Auswerteeinrichtung bestimmten Temperatur und/oder anhand des mindestens einen Temperaturgradienten zu regeln. Wie weiter oben beschrieben wurde, kann beispielsweise anhand der Temperatur des Pulvers an einer Position vor der Bearbeitungsposition des Bearbeitungsstrahls, d.h. anhand des Vorlaufs, und/oder anhand der Temperatur bzw. eines Temperaturgradienten hinter der Bearbeitungsposition des Bearbeitungsstrahls die Leistung des Bearbeitungsstrahls angepasst, d.h. erhöht oder reduziert werden, bevor der Bearbeitungsstrahl die Bearbeitungsposition erreicht, um Inhomogenitäten bei der Pulveraufheizung instantan, d.h. in Echtzeit, zu korrigieren. Alternativ oder zusätzlich kann ein Temperaturgradient, beispielsweise in Form der Abkühlrate, bestimmt werden, um festzustellen, wie viel Wärme im Bauteil bzw. im Pulverbett beim Aufschmelzen einer Schicht des Pulverbetts gespeichert wird. Für das Aufschmelzen der nachfolgenden Pulverschicht bzw. -lage können andere Bearbeitungsparameter verwendet werden, beispielsweise können die Laserparameter, insbesondere die Laserleistung, und/oder die Vorschubgeschwindigkeit geeignet angepasst werden.

Bei einem flächigen Aufschmelzen des Pulverbetts, d.h. beim Belichten einer zusammenhängenden Fläche, werden mehrere Wärmespuren erzeugt, die benachbart und parallel zueinander verlaufen. In diesem Fall können Pyrometer-Segmente, die sich im Wesentlichen seitlich zur Vorschubrichtung erstrecken, zusätzlich zu einer Auswertung der momentan erzeugten Wärmespur auch Wärmestrahlung von den noch nicht vollständig abgekühlten benachbarten Wärmespuren detektieren bzw. abbilden. Auf diese Weise können Temperaturgradienten und/oder die Abkühlrate auch in der bzw. den benachbarten, zuletzt bestrahlten Wärmespuren detektiert werden und diese Informationen können für die Regelung von Bearbeitungsparametern, beispielsweise der Leistung des Bearbeitungslaserstrahls und/oder der Vorschubgeschwindigkeit, bei der Erzeugung der momentanen Wärmespur herangezogen werden. Eine solche Regelung erfolgt nicht in Echtzeit und ist daher einfach umsetzbar.

Ein weiterer Aspekt der Erfindung betrifft eine Bearbeitungsmaschine zum Herstellen von dreidimensionalen Bauteilen durch Bestrahlen von Pulverschichten mittels eines Bearbeitungsstrahls, insbesondere mittels eines Laserstrahls, wobei die Bearbeitungsmaschine eine Bestrahlungseinrichtung wie weiter oben beschrieben sowie eine Bearbeitungskammer mit einem Träger zum Aufbringen der Pulverschichten aufweist. Die Bestrahlungseinrichtung ist von der Bearbeitungskammer typischerweise über ein Schutzglas oder dergleichen getrennt, durch welches der Bearbeitungsstrahl in die Bearbeitungskammer eintritt. Die Bestrahlungseinrichtung ist typischerweise bezüglich der Bearbeitungskammer derart angeordnet, dass das Bearbeitungsfeld der Scannereinrichtung, in dem der Bearbeitungsstrahl fokussiert wird, mit der Position einer Pulverschicht übereinstimmt, die mittels des Bearbeitungsstrahls bestrahlt werden soll. Es versteht sich, dass die Bearbeitungsmaschine noch weitere Bauelemente aufweist, die das Aufbringen der einzelnen Pulverschichten ermöglichen. In der Bearbeitungskammer kann ggf. ein gegenüber der Umgebung reduzierter Druck bzw. ein Vakuum herrschen, sie kann aber auch mit einem inerten Gas gefüllt sein, das nicht mit dem Pulver reagiert.

Wie weiter oben beschrieben wurde, ist die Vorschub- bzw. die Scangeschwindigkeit bei einem LMF-Prozess sehr groß, so dass die für herkömmliche Bearbeitungsprozesse, beispielsweise für herkömmliche Laserschweißprozesse, mit vergleichsweise geringen Vorschubgeschwindigkeiten vorhandenen Lösungen nicht anwendbar sind: Beispielsweise kann bei herkömmlichen Laserschweißprozessen durch eine Erhöhung der Messdynamik der Kamera eine Temperaturmessung mit Hilfe von Mehrfachbelichtungen erfolgen, was aufgrund der vergleichsweise hohen Scangeschwindigkeiten beim LMF-Prozess nicht möglich ist. Bei einem LMF-Prozess wird das Schmelzbad bei bekannten Lösungen vielmehr mit Hilfe von Kamerasystemen (IR- oder sichtbarer Wellenlängenbereich) und/oder mit Hilfe von Dioden aufgenommen. Auf diese Weise werden aber lediglich die Temperatur und die Geometrie des Schmelzbads erfasst. Das für die Bauteileigenschaften wichtige Abkühlverhalten sowie der Aufheizvorgang des Pulvers kann hierbei nicht gemessen werden; dies wird erst durch die weiter oben beschriebene Bestrahlungseinrichtung ermöglicht. Anhand der auf die weiter oben beschriebene Weise ermittelten Pulvertemperatur, der Temperaturen beim Aufheizen und/oder beim Abkühlen kann bei der hier beschriebenen Bearbeitungsmaschine eine Regelung des LMF-Prozesses erreicht werden. Auch wird idealerweise die Messung von vollständigen Temperaturverläufen an jeder Position bzw. Stelle des zu erzeugenden dreidimensionalen Bauteils ermöglicht. Dies wird durch eine höhere Messdynamik, eine höhere Empfindlichkeit bei der Messung der Wärmestrahlung, eine aufgrund der geringeren Anzahl von Pixeln geringere Datenrate als bei herkömmlichen Kameras sowie eine damit einhergehende schnellere Messrate erreicht.

Weitere Vorteile der Erfindung ergeben sich aus der Beschreibung und der Zeichnung. Ebenso können die vorstehend genannten und die noch weiter aufgeführten Merkmale je für sich oder zu mehreren in beliebigen Kombinationen Verwendung finden. Die gezeigten und beschriebenen Ausführungsformen sind nicht als abschließende Aufzählung zu verstehen, sondern haben vielmehr beispielhaften Charakter für die Schilderung der Erfindung.

Es zeigen:
- Fig. 1: eine schematische Darstellung eines Ausführungsbeispiels einer Bearbeitungsmaschine mit einer Bestrahlungseinrichtung zum Bestrahlen eines Bearbeitungsfelds,
- Fig. 2: eine Darstellung eines Teilbereichs des Bearbeitungsfelds mit einem Schmelzbad und mit einem Brennfleck, an dem eine Bearbeitungsposition gebildet ist,
- Fig. 3a,b: Darstellungen eines Pyrometers mit einem ersten, zentralen Pyrometer-Segment und mit 16 bzw. mit 199 zweiten Pyrometer-Segmenten, die das erste, zentrale Pyrometer-Segment umgeben, wobei die Pyrometer-Segmente an der Oberfläche einer segmentierten Diode gebildet sind, sowie
- Fig. 4: eine Darstellung eines Pyrometers mit einer Grundplatte, die eine Mehrzahl von Pyrometer-Segmenten aufweist, sowie mit einer Strahlungstransporteinrichtung zum Transport von Wärmestrahlung zu einer Diode.

In der folgenden Beschreibung der Zeichnungen werden für gleiche bzw. funktionsgleiche Bauteile identische Bezugszeichen verwendet.

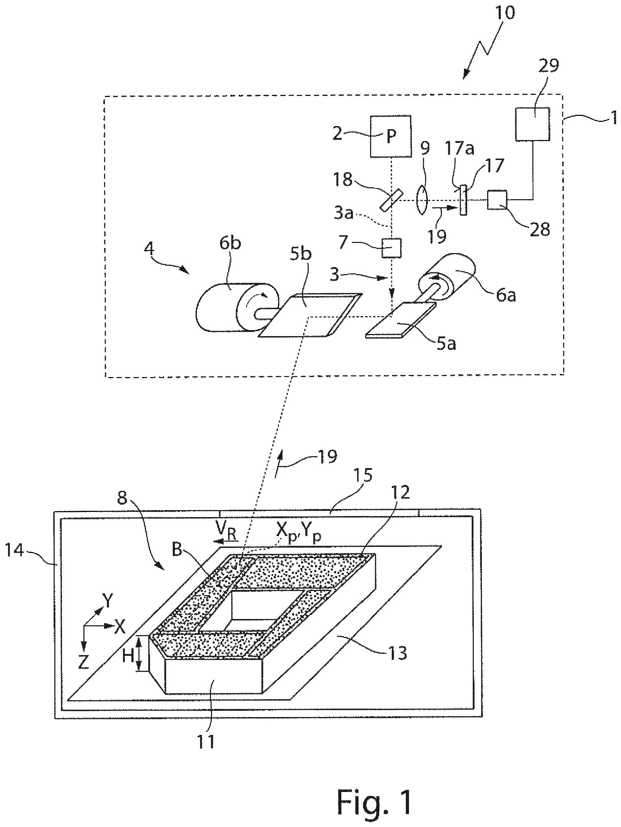

**Fig. 1** zeigt einen beispielhaften Aufbau einer Bestrahlungseinrichtung 1, die eine Strahlquelle 2 in Form einer Laserquelle, beispielsweise in Form eines Nd:YAG-Lasers oder eines Faserlasers, zur Erzeugung eines Bearbeitungsstrahls in Form eines Laserstrahls 3 aufweist. Eine Scannereinrichtung 4 weist einen ersten und einen zweiten Scannerspiegel 5a, 5b auf, die mittels zugehöriger Drehantriebe 6a, 6b um zwei Drehachsen drehbar sind, die im gezeigten Beispiel mit der X-Richtung bzw. mit der Y-Richtung eines XYZ-Koordinatensystems übereinstimmen. Im Strahlengang vor der Scannereinrichtung 4 ist eine (adaptive) Fokussiereinrichtung 7 angeordnet, welche eine Fokussierung des Laserstrahls 3 vornimmt, um den von der Scannereinrichtung 4 abgelenkten Laserstrahl 3 in einem Bearbeitungsfeld 8 zu fokussieren, sowie um den Laserstrahl 3 an einer gewünschten Bearbeitungsposition X_{P}, Y_{P} auf dem Bearbeitungsfeld 8 auszurichten.

Die Bestrahlungseinrichtung 1 ist Teil einer Bearbeitungsmaschine 10, die zum Herstellen von dreidimensionalen Bauteilen 11 verwendet wird. Das Bearbeitungsfeld 8 entspricht einer XY-Ebene, in der eine in Fig. 1 gezeigte oberste Pulverschicht 12 eines auf einen Träger 13, genauer gesagt auf eine Trägerplatte, aufgebrachten Pulverbetts angeordnet ist. Der Träger 13 ist in einer Bearbeitungskammer 14 angeordnet, die ein Sichtfenster 15 für den Durchtritt des Laserstrahls 3 aufweist.

Die (adaptive) Fokussiereinrichtung 7 dient unter anderem dazu, die Strahlachse Z des aus der Fokussiereinrichtung 7 austretenden Laserstrahls 3 unabhängig von der Bearbeitungsposition X_{P}, Y_{P} auf dem Bearbeitungsfeld 8, welches bei einer geeigneten Positionierung der Bestrahlungseinrichtung 1 mit der XY-Ebene der in einer vorgegebenen Höhe H über dem Träger 13 angeordneten Pulverschicht 12 übereinstimmt, im Wesentlichen senkrecht zur XY-Ebene bzw. zur Pulverschicht 12 auszurichten. Es versteht sich, dass die Pulverschicht 12 anders als in Fig. 1 gezeigt ist nicht nur auf die Oberseite des bereits fertiggestellten Teils des dreidimensionalen Bauteils 11 begrenzt ist, sondern vielmehr die oberste Schicht eines Pulverbettes bildet, welches sich über die gesamte Oberseite des Trägers 13 bis zur Höhe H erstreckt. Für die Ausrichtung des Laserstrahls 3 im Wesentlichen senkrecht zur XY-Ebene kann alternativ oder zusätzlich zur Fokussiereinrichtung 7 auch ein F/theta-Objektiv verwendet werden.

Die Pulverschicht 12, genauer gesagt der in Fig. 1 gezeigte Bereich der Pulverschicht 12, welcher für das Herstellen einer zusätzlichen Schicht des dreidimensionalen Bauteils 11 bestrahlt werden soll und welcher daher mit der Geometrie des herzustellenden Bauteils 11 übereinstimmt, wird bei dem in Fig. 1 gezeigten Beispiel von der Bearbeitungsmaschine 10, beispielsweise von einer Steuer- und/oder Regelungseinrichtung 29 der Bestrahlungseinrichtung 1, in vier in Fig. 1 gezeigte flächenhafte Teilbereiche sowie in einen weiteren Teilbereich aufgeteilt, der im Wesentlichen die inneren und äußeren Konturlinien des Bauteils 11 auf der entsprechenden Höhe H sowie weitere innen liegende Konturlinien enthält, welche die vier flächenhaften Teilbereiche auf der entsprechenden Höhe H voneinander separieren.

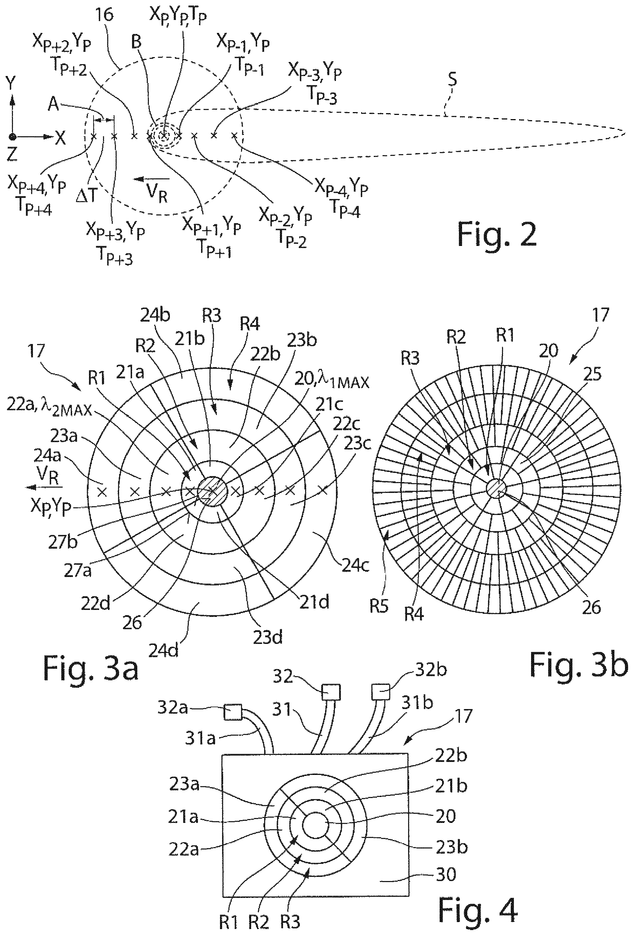

Wie in Fig. 1 angedeutet ist, wird der Laserstrahl 3 in dem Bearbeitungsfeld 8 entlang einer Vorschubrichtung v_{R} bzw. einer Scanrichtung bewegt, welche im gezeigten Beispiel der negativen X-Richtung entspricht. Wärmestrahlung 19, die von einem kreisförmigen Teilbereich 16 des Bearbeitungsfeldes 8 ausgeht, welcher in **Fig. 2** dargestellt ist, wird von einer Abbildungseinrichtung in Form einer Relay-Optik 9 beispielsweise in Form eines Objektivs, welche in Fig. 1 zur Vereinfachung als Linse dargestellt ist, auf ein in Fig. 1 gezeigtes Pyrometer 17 abgebildet. Hierbei wird der Strahlengang des Laserstrahls 3 entlang eines Beobachtungsstrahlengangs 3a von der Wärmestrahlung 19 in umgekehrter Richtung durchlaufen und die Wärmestrahlung 19 wird an einem Strahlteilerspiegel 18 aus dem Strahlengang des Laserstrahls 3 ausgekoppelt. Das Pyrometer 17 ist zentrisch im Beobachtungsstrahlengang 3a der Wärmestrahlung 19 angeordnet, so dass die Abbildungseinrichtung 9 Wärmestrahlung 19, die von der Bearbeitungsposition X_{P}, Y_{P} in dem Teilbereich 16 ausgeht, auf ein erstes, kreisförmiges Pyrometer-Segment 20 des in **Fig. 3a** in einer Draufsicht gezeigten Pyrometers 17 abbildet.

Das erste Pyrometer-Segment 20 ist von mehreren zweiten Pyrometer-Segmenten 21a-d, 22a-d, 23a-d, 24a-d umgeben, die in vier konzentrischen Ringen R1 bis R4 um das erste Pyrometer-Segment 20 angeordnet sind. Der in Fig. 2 gezeigte Teilbereich 16 des Bearbeitungsfelds 8 wird mit Hilfe der Abbildungseinrichtung 9 auf die von den ersten und zweiten Pyrometer-Segmenten 20, 21a-d, 22a-d, 23a-d, 24a-d des Pyrometers 17 überdeckte kreisförmige Fläche abgebildet. Der Abbildungsmaßstab wird hierbei derart gewählt, dass der Durchmesser des Brennflecks B im Wesentlichen mit dem Durchmesser des ersten Pyrometer-Segments 20 übereinstimmt.

Die zweiten Pyrometer-Segmente 21a-d, 22a-d, 23a-d, 24a-d sind jeweils als Ringsegmente ausgebildet und erstrecken sich jeweils über einen Winkel von 90° in Umfangsrichtung, d.h. jeweils über einen Quadranten. Die zweiten Pyrometer-Segmente 21a-d, 22a-d, 23a-d, 24a-d sind drehsymmetrisch um das erste Pyrometer-Segment 20 angeordnet.

Wie beispielhaft für das in Fig. 3a links dargestellte zweite Pyrometer-Segment 21a des ersten Ringbereichs R1 gezeigt ist, weisen die als Ringsegmente ausgebildeten zweiten Pyrometer-Segmente 21a-d, 22a-d, 23a-d, 24a-d jeweils ein Außenkontur mit einer radial innen liegenden kreisbogenförmigen Außenkante 27a sowie einer radial außen liegenden kreisbogenförmigen Außenkante 27b auf, die durch zwei sich in radialer Richtung erstreckende geradlinige Außenkanten miteinander verbunden sind.

Bei dem in Fig. 3a gezeigten Beispiel ist das Pyrometer als segmentierte Diode 17 ausgebildet und die Pyrometer-Segmente 20, 21a-d, 22a-d, 23a-d, 24a-d sind an deren Oberfläche 17a (vgl. Fig. 1) gebildet. Bei einem Pyrometer in Form einer segmentierten Diode 17 können das kreisförmige erste Pyrometer-Segment 20 sowie die zweiten Pyrometer-Segmente 21a-d, 22a-d, 23a-d, 24a-d mit Hilfe einer Mikrostrukturierung der Oberfläche 17a der Diode 17 erzeugt werden, so dass diese elektrisch getrennt kontaktiert werden können. Es versteht sich, dass durch eine Mikrostrukturierung der Diode 17 auch geometrisch auf andere Weise als in Fig. 3a geformte erste und zweite Pyrometer-Segmente 20, 21a-d, 22a-d, 23a-d, 24a-d hergestellt werden können.

Der in Fig. 2 gezeigte überwachte Bereich 16 enthält den Brennfleck B, an dem der Laserstrahl 3 auf die Pulverschicht 12 trifft und in dessen Mitte die Bearbeitungsposition X_{P}, Y_{P} gebildet ist, sowie einen vorderen Abschnitt des Schmelzbads S, in dem sich geschmolzenes Pulver gebildet hat. An das Schmelzbad S schließt sich entgegen der Vorschubrichtung v_{R}, d.h. in Fig. 2 rechts, die Wärmespur mit dem erkaltenden Pulvermaterial an, die sich im gezeigten Beispiel nicht innerhalb des Teilbereichs 16 des Bearbeitungsfelds 8 befindet.

Die Temperatur T_{P} an der Bearbeitungsposition X_{P}, Y_{P} liegt typischerweise in der Größenordnung von ca. 2000°C und stellt die maximale Temperatur des Schweißprozesses dar, während die Temperatur in der Umgebung des Brennflecks B deutlich niedriger ist, weshalb auch die Intensität der auf das Pyrometer 17 auftreffenden Wärmestrahlung 19 deutlich geringer ausfällt als am Brennfleck B. Es kann günstig sein, wenn im Strahlweg zwischen dem Bearbeitungsfeld 8 und dem ersten Pyrometer-Segment 20 und/oder mindestens einem der zweiten Pyrometer-Segmente 21a-d, 22a-d, 23a-d, 24a-d eine Filtereinrichtung angeordnet ist, um die von dem Teilbereich 16 bzw. von dem Bearbeitungsfeld 8 ausgehende Wärmestrahlung 19 abzuschwächen.

Bei dem Pyrometer in Form der strukturierten Diode 17 können derartige Filtereinrichtungen in Form einer Beschichtung auf einzelne der Pyrometer-Segmente 20, 21a-d, 22a-d, 23a-d, 24a-d aufgebracht werden. In Fig. 3a ist eine solche Filtereinrichtung 26, welche in Form einer Beschichtung auf das erste, zentrale Pyrometer-Segment 20 aufgebracht ist, durch eine Schraffur angedeutet. Die Filtereinrichtung 26 dient dazu, die Wärmestrahlung 19, die von der Bearbeitungsposition X_{P}, Y_{P} bzw. dem Brennfleck B ausgeht, abzuschwächen, an dem die maximale Intensität der Wärmestrahlung 19 emittiert wird. Die Filtereinrichtung 26 kann zu diesem Zweck als Bandpassfilter ausgebildet sein, der für eine Wellenlänge, die der maximalen Emission eines schwarzen oder grauen Strahlers bei der Temperatur T_{P} von ca. 2000°C entspricht, nur eine geringe Transmission aufweist.

Entsprechend kann ggf. auch eine Filterung an den zweiten Pyrometer-Segmenten 21a-d, 22a-d, 23a-d, 24a-d erfolgen. Für die Bestimmung der Temperatur T_{P} an der Bearbeitungsposition X_{P}, Y_{P} sowie an weiteren Positionen (s.u.) in dem abgebildeten Teilbereich 16 des Bearbeitungsfelds 8 kann es günstig sein, wenn die Filtereinrichtung 26 als Bandpassfilter ausgebildet ist, der so ausgelegt ist, dass dieser Wärmestrahlung 19 bei zwei unterschiedlichen Wellenlängen transmittiert, die für ein jeweiliges Pyrometer-Segment 20, 21a-d, 22a-d, 23a-d, 24a-d getrennt detektiert werden, um auf diese Weise direkt, d.h. ohne die Kenntnis der Emissivität, auf die Temperatur T_{P} an der Bearbeitungsposition X_{P}, Y_{P} oder an anderen Positionen zu schließen.

Die Pyrometer-Segmente 20, 21a-d, 22a-d, 23a-d, 24a-d der strukturierten Diode 17 können alternativ oder zusätzlich zur Verwendung von Filtereinrichtungen 26 aus unterschiedlichen Materialien hergestellt sein, genauer gesagt aus Materialien, die eine unterschiedliche wellenlängenabhängige Empfindlichkeit für die von dem Teilbereich 16 des Bearbeitungsfelds 8 ausgehende Wärmestrahlung 19 aufweisen. Bei dem in Fig. 3a gezeigten Beispiel weist das erste Pyrometer-Segment 20 eine maximale Empfindlichkeit bei einer Maximums-Wellenlänge λ_{1MAX} auf, welche an die Wellenlänge maximaler Emission von Wärmestrahlung 19 eines schwarzen bzw. grauen Strahlers mit einer Temperatur von. ca. 2000°C angepasst ist. Die zweiten Pyrometer-Segmente 21a-d in dem ersten Ringbereich R1 weisen demgegenüber eine maximale Empfindlichkeit bei einer (größeren) Maximums-Wellenlänge λ_{2MAX} auf, die an die entsprechend geringeren Temperaturen der Wärmestrahlung 19 angepasst ist, die auf die zweiten Pyrometer-Segmente 21a-d in dem ersten Ringbereich R1 auftrifft. Die Maximums-Wellenlänge λ_{1MAX} des ersten Pyrometer-Segments 20 ist kleiner als die Maximums-Wellenlänge λ_{2MAX} der zweiten Pyrometer-Segmente 20 in dem ersten Ringbereich R1. Entsprechend können auch die Pyrometer-Segmente 22a-d in dem zweiten Ringbereich R2 eine maximale Empfindlichkeit bzw. eine Maximums-Wellenlänge aufweisen, die größer ist als die Maximums-Wellenlänge λ_{2MAX} der zweiten Pyrometer-Segmente 20 in dem ersten Ringbereich R1, usw.

In Fig. 2 sind vier Positionen X_{P+4}, Y_{P}; X_{P+3}, Y_{P}; X_{P+2}, Y_{P}; X_{P+1}, Y_{P} dargestellt, die sich in Vorschubrichtung v_{R} (entsprechend der Scanrichtung) vor der Bearbeitungsposition X_{P}, Y_{P} befinden, sowie vier Positionen X_{P-1}, Y_{P}; X_{P-2}, Y_{P}; X_{P-3}, Y_{P}; X_{P-4}, Y_{P} die sich entlang der Vorschubrichtung v_{R} hinter der Bearbeitungsposition X_{P}, Y_{P} befinden. Die in Fig. 2 gezeigten Positionen X_{P+4}, Y_{P}; X_{P+3}, Y_{P}; X_{P+2}, Y_{P}, X_{P+1}, Y_{P} bzw. X_{P-1}, Y_{P}; X_{P-2}, Y_{P}; X_{P-3}, Y_{P}; X_{P-4}, Y_{P} genauer gesagt deren jeweilige Abstände von der Bearbeitungsposition X_{P}, Y_{P}, sind im gezeigten Beispiel derart gewählt, dass diese sich ungefähr in der Mitte der in Fig. 3a links dargestellten zweiten Pyrometer-Segmente 21a, 22a, 23a, 24a bzw. ungefähr in der Mitte der in Fig. 3a rechts dargestellten zweiten Pyrometer-Segmente 21c, 22c, 23c, 24c befinden. Für die jeweilige Position X_{P+4}, Y_{P}; X_{P+3}, Y_{P}; X_{P+2}, Y_{P}; X_{P+1}, Y_{P} in Vorschubrichtung v_{R} vor der Bearbeitungsposition X_{P}, Y_{P} kann anhand der auf das jeweilige zweite Pyrometer-Segment 21a, 22a, 23a, 24a auftreffenden Wärmestrahlung 19 die zugehörige Temperatur T_{P+4}, T_{P+3}, T_{P+2}, T_{P+1} in einer Auswerteeinrichtung 28 (vgl. Fig. 1) der Bestrahlungseinrichtung 1 bestimmt werden. Entsprechend kann auch für eine jeweilige Position X_{P-1}, Y_{P}; X_{P-2}, Y_{P}; X_{P-3}, Y_{P}; X_{P-4}, Y_{P} in Vorschubrichtung v_{R} nach der Bearbeitungsposition X_{P}, Y_{P} anhand der auf das jeweilige zweite Pyrometer-Segment 21c, 22c, 23c, 24c auftreffenden Wärmestrahlung 19 die zugehörige Temperatur T_{P-1,} T_{P-2}, T_{P-3}, T_{P-4} in der Auswerteeinrichtung 28 bestimmt werden.

Die Auswerteeinrichtung 28 ist ausgebildet, anhand der von der Steuer- und/oder Regeleinrichtung 29 vorgegebenen Vorschubrichtung v_{R}, die der Auswerteeinrichtung 28 bekannt ist, diejenigen zweiten Pyrometer-Segmente 21a, 22a, 23a, 24a zu identifizieren, die bei der momentanen Vorschubrichtung v_{R} vor der Bearbeitungsposition X_{P}, Y_{P} positioniert sind, sowie diejenigen zweiten Pyrometer-Segmente 21c, 22c, 23c, 24c, die bei der momentanen Vorschubrichtung v_{R} hinter der Bearbeitungsposition X_{P}, Y_{P} angeordnet sind. Es versteht sich, dass beispielsweise bei einer Drehung der Vorschubrichtung v_{R} um 90° gegenüber der in Fig. 3a gezeigten Vorschubrichtung v_{R} jeweils die in Fig. 3a oben angeordneten zweiten Pyrometer-Segmente 21b, 22b, 23b, 24b bzw. die in Fig. 3a unten angeordneten zweiten Pyrometer-Segmente 21d, 22d, 23d, 24d für die Bestimmung der jeweiligen Temperaturen herangezogen werden. Auch für den Fall, dass die Vorschubrichtung v_{R} wie in Fig. 3a dargestellt verläuft, können die in Fig. 3a oben angeordneten zweiten Pyrometer-Segmente 21b, 22b, 23b, 24b bzw. die in Fig. 3a unten angeordneten zweiten Pyrometer-Segmente 21d, 22d, 23d, 24d zur Bestimmung von Temperaturen bzw. von Temperaturgradienten ΔT quer bzw. im Wesentlichen quer zur Vorschubrichtung v_{R} verwendet werden. Dies ist insbesondere bei einem flächigen Aufschmelzen des Pulverbetts günstig, bei dem mehrere Wärmespuren erzeugt werden, die benachbart und parallel zueinander verlaufen, so dass auf diese Weise auch die noch nicht vollständig abgekühlten benachbarten Wärmespuren von der Auswerteeinrichtung 28 ausgewertet werden können.

Die Auswerteeinrichtung 28 kann auch zur Bestimmung von Temperaturgradienten ΔT anhand der jeweiligen Temperaturen T_{P+4}, T_{P+3}, T_{P+2}, T_{P+1}, T_{P}, T_{P-1}, T_{P-2}, T_{P-3}, T_{P-4} herangezogen werden, beispielsweise indem die Differenz zwischen zwei der Temperaturen, z.B. T_{P+4} - T_{P+3}, gebildet wird und diese Differenz durch den (aufgrund des Abbildungsmaßstabs der Abbildungseinrichtung 9 bekannten) Abstand A zwischen den beiden zugehörigen Positionen X_{P+4}, X_{P+3} in dem Bearbeitungsfeld 8 dividiert wird: ΔT = (T_{P+4} - T_{P+3}) / A.

Mit Hilfe der Steuer- und/oder Regeleinrichtung 29 kann der Schweißprozess anhand der mindestens einen von der Auswerteeinrichtung 28 bestimmten Temperatur T_{P+4}, T_{P+3}, T_{P+2}, T_{P+1}, T_{P}, T_{P-1}, T_{P-2}, T_{P-3}, T_{P-4} und/oder eines jeweiligen Temperaturgradienten ΔT geregelt werden, beispielsweise indem die Leistung P des Laserstrahls 3 und/oder die Vorschubgeschwindigkeit v_{R} so eingestellt werden, dass eine oder mehrere der Temperaturen T_{P+4}, T_{P+3}, T_{P+2}, T_{P+1}, T_{P}, T_{P-1,} T_{P-2}, T_{P-3}, T_{P-4} bzw. einer oder mehrere Temperaturgradienten ΔT in einem vorgegebenen Wertebereich liegen. Die Bestimmung von Temperaturgradienten ΔT insbesondere im Bereich der Wärmespur hat sich als günstig erwiesen, um die thermische Historie und damit die Mikrostruktur des Materialgefüges des dreidimensionalen Werkstücks zu bestimmen. Die Regelung des Schweißprozesses mit Hilfe der Steuer- und/oder Regeleinrichtung 29 kann in Echtzeit erfolgen, es ist aber auch möglich, dass die Regelung schichtweise erfolgt, d.h. der Temperaturgradient ΔT, beispielsweise in Form der Abkühlrate, wird für eine gesamte aufgebrachte Pulverschicht 3 bestimmt, um festzustellen, wie viel Wärme im Bauteil bzw. im Pulverbett beim Aufschmelzen einer Pulverschicht 3 des Pulverbetts gespeichert wird. Für das Aufschmelzen der nachfolgenden Pulverschicht 3 können andere Bearbeitungsparameter verwendet werden, d.h. es können beispielsweise die Laserleistung P und/oder die Vorschubgeschwindigkeit v_{R} geeignet angepasst werden.

Insbesondere für den Fall, dass das Pyrometer 17 eine Vielzahl von zweiten Pyrometer-Segmenten 25 aufweist, kann die Steuer- und/oder Regeleinrichtung 29 auch dazu dienen, die von der Auswerteeinrichtung 28 gelieferten Informationen über die noch nicht vollständig abgekühlten benachbarten Wärmespuren zu verwenden, um die Regelung von Bearbeitungsparametern, beispielsweise der Leistung P des Bearbeitungslaserstrahls 3 und/oder der Vorschubgeschwindigkeit v_{R}, bei der Erzeugung der momentanen Wärmespur zu verwenden. Eine solche Regelung erfolgt nicht in Echtzeit und ist daher einfach umsetzbar.

Es versteht sich, dass der Teilbereich 16 des Bestrahlungsbereichs 8, der von der Abbildungseinrichtung 9 auf das Pyrometer 17 abgebildet wird, auch größer als in Fig. 2 dargestellt ausfallen kann, so dass auch die in Fig. 2 rechts neben dem Schmelzbad S befindliche Wärmespur auf das Pyrometer 17 abgebildet wird. Der Durchmesser des Teilbereichs 16 kann beispielsweise zwischen ca. 2 mm und ca. 10 mm variieren. Die Abbildungseinrichtung 9 kann ggf. als Zoom-Objektiv ausgebildet sein, um unterschiedliche Abbildungsmaßstäbe zu realisieren.

Fig. 3b zeigt ein weiteres Beispiel für ein Pyrometer 17 in Form einer segmentierten Diode, welches sich von dem in Fig. 3a gezeigten Beispiel dadurch unterscheidet, dass die zweiten Pyrometer-Segmente 25 in fünf Ringbereichen R1 bis R5 um das zentrale erste Pyrometer-Segment 20 herum angeordnet sind. Bei dem in Fig. 3b gezeigten Beispiel sind um das erste Pyrometer-Segment 20 einhundertneunundneunzig zweite Pyrometer-Segmente 25 angeordnet, deren Flächeninhalt im gezeigten Beispiel jeweils gleich groß ist. Die Unterteilung der segmentierten Diode 17 in eine größere Anzahl von Pyrometer-Segmenten 20, 25 insbesondere in Umfangsrichtung ist vorteilhaft, um die Ortsauflösung zu erhöhen und auf diese Weise zu vermeiden, dass Wärmestrahlung 19 von noch nicht vollständig erkaltetem Werkstückmaterial bzw. Pulver, das bei einem vorhergehenden Schweißprozess erzeugt wurde, die Temperaturmessung entlang der Vorschubrichtung v_{R} beeinflusst.

Die Fig. 3a,b gezeigte segmentierte Diode 17 zeichnet sich durch einen hohen Füllfaktor, eine aufgrund des monolithischen Designs hohe Stabilität sowie durch die Möglichkeit aus, auf eine ökonomische Weise eine Vielzahl von Pyrometer-Segmenten zu realisieren. Gegebenenfalls kann das Pyrometer zusätzlich zu der in Fig. 3a bzw. in Fig. 3b gezeigten segmentierten Diode 17 weitere Dioden bzw. wärmeempfindliche Sensoren aufweisen, die dazu dienen, Wärmestrahlung 19 von weiter von der Bearbeitungsposition X_{P}, Y_{P} entfernten Bereichen des Bearbeitungsfeldes 8 zu detektieren.

Fig. 4 zeigt ein Beispiel für ein Pyrometer 17, welches sich von den in Fig. 3a,b gezeigten Pyrometer 17 zunächst dadurch unterscheidet, dass das erste Pyrometer-Segment 20 und die zweiten Pyrometer-Segmente 21a, 21b, 22a, 22b, 23a, 23b in drei Ringbereichen R1 bis R3 auf einer gemeinsamen Oberfläche 30 angeordnet sind. Zudem erstrecken sich die zweiten Pyrometer-Segmente 21a, 21b, 22a, 22b, 23a, 23b jeweils über einen Winkelbereich von 180°, was für die Zuordnung der zweiten Pyrometer-Segmente 21a, 21b, 22a, 22b, 23a, 23b zu (nicht gezeigten) Positionen vor bzw. hinter der Bearbeitungsposition X_{P}, Y_{P} ausreichend ist, sofern die Vorschubrichtung v_{R} nicht exakt entlang der Grenze zwischen benachbarten Pyrometer-Segmenten 21a, 21b, 22a, 22b, 23a, 23b verläuft. Das erste Pyrometer-Segment 20 und die zweiten Pyrometer-Segmente 21a, 21b, 22a, 22b, 23a, 23b stehen jeweils über eine Strahlungstransporteinrichtung 31, 31a, 31b, ... mit einem Detektor in Form einer herkömmlichen Diode 32, 32a, 32b, ... in Verbindung, wie dies in Fig. 4 beispielhaft für das erste Pyrometer-Segment 20 sowie für die beiden Pyrometer-Segmente 21a, 21b des ersten Ringbereichs R1 dargestellt ist. Die Strahlungstransporteinrichtungen 31, 31a, 31b, ... ermöglichen ein räumlich getrenntes Auffangen der auf ein jeweiliges Pyrometer-Segment 20, 21a, 21b, 22a, 22b, 23a, 23b auftreffenden Wärmestrahlung 19.

Die Strahlungstransporteinrichtungen 31, 31a, 31b, ... sind geometrisch geeignet angeordnet, um Lichtleitkegel bzw. eine Lichtleitung zu der jeweiligen Diode 32, 32a, 32b,... zu bilden und können beispielsweise auf Reflexion, Totalreflexion, Brechung oder auf diffraktiven Optiken basieren. Im gezeigten Beispiel werden als Strahlungstransporteinrichtungen 31, 31a, 32b, ... Lichtwellenleiter in Form von Fasern verwendet, welche zum räumlich getrennten Auffangen und Weiterleiten der Wärmestrahlung 19 von der Oberfläche 30 zu den in diesem Fall fasergekoppelten Standard-Dioden 32, 32a, 32b, ... dienen. Die Oberfläche 30, auf welche die Abbildungseinrichtung 9 die Wärmestrahlung 19 abbildet, kann beispielsweise die Stirnseite eines Multicore-Lichtwellenleiters, beispielsweise in Form eines Faserbündels, bilden, dessen Kerne wie in Fig. 4 gezeigt ist an ihrer Stirnseite ringförmig um ein Zentrum angeordnet sind. Der in Fig. 4 gezeigte Querschnitt bzw. die Stirnseiten der Pyrometer-Segmente 20, 21a, 21b, 22a, 22b, 23a, 23b können über unterschiedliche Lichtwellenleiter 31, 31a, 32b, ... des Multicore-Lichtwellenleiters in Form von Fasern mit beispielsweise kreisförmigen Querschnitt zu der jeweiligen Diode 32, 32a, 32b, ... geführt werden. Durch die Lichtwellenleiter 31, 31a, 32b, ... kann die Wärmestrahlung 19 auf die jeweilige Standard-Diode 32, 32a, 32b, ... geleitet werden.

Wie weiter oben im Zusammenhang mit Fig. 3a beschrieben wurde, können die Dioden 32, 32a, 32b, ... aus unterschiedlichen Materialien gebildet sein, die an die Wellenlänge maximaler Emission im jeweils zu erwartenden Temperaturbereich der auf die jeweiligen Pyrometer-Segmente 20, 21a, 21b, 22a, 22b, 23a, 23b auftreffenden Wärmestrahlung 19 angepasst sind. Beispielsweise kann die Diode 32, welche dem ersten Pyrometer-Segment 20 zugeordnet ist, eine kleinere Maximums-Wellenlänge λ_{1MAX} aufweisen als die Maximums-Wellenlänge λ_{2MAX} der beiden Dioden 32a, 32b, die den in dem ersten Ringbereich R1 angeordneten zweiten Pyrometer-Segmenten 21a, 21b zugeordnet sind. Bei dem in Fig. 4 gezeigten Beispiel wird gegenüber der Verwendung mehrerer nebeneinander angeordneter Dioden, die aufgrund von Anschlüssen etc. nicht unmittelbar benachbart angeordnet werden können, ein höherer Füllfaktor realisiert.

## Patentansprüche

1. Bestrahlungseinrichtung (1) zum Bestrahlen eines Bearbeitungsfelds (8) mit einem Bearbeitungsstrahl, insbesondere mit einem Laserstrahl (3), für das Durchführen eines Schweißprozesses, umfassend:
eine Scannereinrichtung (4) zum Ausrichten des Bearbeitungsstrahls auf eine
Bearbeitungsposition (Xp, Yp) in dem Bearbeitungsfeld (8),
ein Pyrometer (17),
eine Abbildungseinrichtung (9) zur Abbildung eines Teilbereichs (16) des
Bearbeitungsfelds (8) auf das Pyrometer (17),
**dadurch gekennzeichnet, dass** das Pyrometer mindestens zwei
Pyrometer-Segmente (20; 21a-d, 22a-d, 23a-d, 24a-d; 25) aufweist,
wobei die Abbildungseinrichtung (9) Wärmestrahlung (19), die von der Bearbeitungsposition (X_{P}, Y_{P}) in dem Bearbeitungsfeld (8) ausgeht, auf ein erstes Pyrometer-Segment (20) abbildet, und wobei die Abbildungseinrichtung (9) Wärmestrahlung (19), die von mindestens einer Position (X_{P+4}, Y_{P}; X_{P+3}, Y_{P}; X_{P+2},
Y_{P}; X_{P+1}, Y_{P}; X_{P-1}, Y_{P}; X_{P-2}, Y_{P}; X_{P-3}, Y_{P}; X_{P-4}, Y_{P}) in dem Bearbeitungsfeld (8) ausgeht, die sich entlang einer Vorschubrichtung (v_{R}) des Bearbeitungsstrahls in dem Bearbeitungsfeld (8) vor oder hinter der Bearbeitungsposition (Xp, Yp) befindet, auf mindestens ein zweites Pyrometer-Segment (21a-d, 22a-d, 23a-d,
24a-d; 25) abbildet, wobei das erste Pyrometer-Segment (20) und/oder das zweite Pyrometer-Segment (21a-d, 22a-d, 23a-d, 24a-d; 25) mindestens eine gekrümmte Außenkante (27a,b) aufweisen.

2. Bestrahlungseinrichtung nach Anspruch 1, bei welcher das erste Pyrometer-Segment (20) und das mindestens eine zweite Pyrometer-Segment (21a-d, 22a-d, 23a-d, 24a-d; 25) an der Oberfläche (17a) einer strukturierten Diode (17) gebildet sind oder über eine jeweilige Strahlungstransporteinrichtung (31, 31a, 31b, ...) mit einem jeweiligen Detektor, insbesondere mit einer Diode (32, 32a, 32b, ...), in Verbindung stehen.

3. Bestrahlungseinrichtung nach Anspruch 1 oder 2, weiter umfassend: eine zwischen dem Bearbeitungsfeld (8) und dem ersten Pyrometer-Segment (20) und/oder mindestens einem zweiten Pyrometer-Segment (21a-d, 22a-d, 23a-d, 24a-d; 25) angeordnete Filtereinrichtung (26) zur insbesondere wellenlängenabhängigen Abschwächung der von dem Bearbeitungsfeld (8) ausgehenden Wärmestrahlung (19).

4. Bestrahlungseinrichtung nach Anspruch 2 oder 3, bei welcher mindestens zwei der Pyrometer-Segmente (20, 21a-d, 22a-d, 23a-d, 24a-d; 25) an der Oberfläche (17a) der strukturierten Diode (17) oder mindestens zwei der über eine jeweilige Strahlungstransporteinrichtung (31, 31a, 31b, ...) mit unterschiedlichen Pyrometer-Segmenten (20, 21a,b, 22a,b, 23a,b, 24a,b) verbundenen Detektoren (32, 32a, 32b, ...) eine unterschiedliche wellenlängenabhängige Empfindlichkeit für die von dem Bearbeitungsfeld (8) ausgehende Wärmestrahlung (19) aufweisen.

5. Bestrahlungseinrichtung nach Anspruch 4, bei welcher das erste Pyrometer-Segment (20) der strukturierten Diode (17) oder der mit dem ersten Pyrometer-Segment (20) verbundene Detektor (32) eine maximale Empfindlichkeit bei einer Maximums-Wellenlänge (λ_{1MAX}) aufweist, die kleiner ist als die Maximums-Wellenlänge (λ_{2MAX}) mindestens eines der zweiten Pyrometer-Segmente (21a-d, 22a-d, 23a-d, 24a-d; 25) der strukturierten Diode (17) oder mindestens eines mit einem zweiten Pyrometer-Segment (21a, 21b) verbundenen Detektors (32a, 32b).

6. Bestrahlungseinrichtung nach einem der vorhergehenden Ansprüche, bei welcher das erste Pyrometer-Segment (20) und/oder das zweite Pyrometer-Segment (21a-d, 22a-d, 23a-d, 24a-d; 25) mindestens eine kreisbogenförmige Außenkante (27a,b) aufweisen.

7. Bestrahlungseinrichtung nach einem der vorhergehenden Ansprüche, bei welcher das erste Pyrometer-Segment (20) kreisförmig ist.

8. Bestrahlungseinrichtung nach einem der vorhergehenden Ansprüche, welche mindestens zwei zweite Pyrometer-Segmente aufweist, die als Ringsegmente (21a-d, 22a-d, 23a-d, 24a-d; 25) ausgebildet sind.

9. Bestrahlungseinrichtung nach Anspruch 8, bei welcher die als Ringsegmente (21a-d, 22a-d, 23a-d, 24a-d; 25) ausgebildeten zweiten Pyrometer-Segmente drehsymmetrisch um das erste Pyrometer-Segment (20) angeordnet sind.

10. Bestrahlungseinrichtung nach einem der Ansprüche 8 oder 9, bei welcher die zweiten Pyrometer-Segmente (21a-d, 22a-d, 23a-d, 24a-d; 25) in mehreren konzentrischen Ringen (R1 bis R4; R1 bis R5; R1 bis R3) angeordnet sind.

11. Bestrahlungseinrichtung nach einem der vorhergehenden Ansprüche, bei welcher das Pyrometer (17) in einem koaxial zum Bearbeitungsstrahl (3) verlaufenden Beobachtungsstrahlengang (3a) angeordnet ist.

12. Bestrahlungseinrichtung nach einem der vorhergehenden Ansprüche, weiter umfassend: eine Steuer- und/oder Regeleinrichtung (29) zur Vorgabe der Vorschubrichtung (v_{R}) bei der Bewegung des Bearbeitungsstrahls über das Bearbeitungsfeld (8).

13. Bestrahlungseinrichtung nach Anspruch 12, weiter umfassend: eine Auswerteeinrichtung (28), die ausgebildet ist, anhand der vorgegebenen Vorschubrichtung (v_{R}) zweite Pyrometer-Segmente (21a, 22a, 23a, 24a, 25a), die in Vorschubrichtung (v_{R}) vor der Bearbeitungsposition (X_{P}, Y_{P}) angeordnet sind, und zweite Pyrometer-Segmenten (21c, 22c, 23c, 24c, 25c), die in Vorschubrichtung (v_{R}) hinter der Bearbeitungsposition (Xp , Yp) angeordnet sind, zu identifizieren.

14. Bestrahlungseinrichtung nach Anspruch 13, bei der die Auswerteeinrichtung (28) zur Bestimmung einer Temperatur (T_{P}) an der Bearbeitungsposition (X_{P}, Y_{P}), einer Temperatur (T_{P+4}, T_{P+3}, T_{P+2}, T_{P+1}; T_{P-1}, T_{P-2}, T_{P-3}, T_{P-4}) an einer Position (X_{P+4}, Yp; X_{P+3}, Y_{P}; X_{P+2}, Y_{P}; X_{P+1}, Y_{P}) in dem Bearbeitungsfeld (8) vor der Bearbeitungsposition (Xp, Y_{P}) und/oder an einer Position (X_{P-1}, Y_{P}; X_{P-2}, Y_{P}; X_{P-3}, Y_{P}; X_{P-4}, Y_{P}) in dem Bearbeitungsfeld (8) hinter der Bearbeitungsposition (Xp, Y_{P}) und bevorzugt zur Bestimmung mindestens eines Temperaturgradienten (ΔT) anhand von mindestens zwei der Temperaturen (T_{P+4}, T_{P+3}) ausgebildet ist.

15. Bestrahlungseinrichtung nach Anspruch 14, bei welcher die Steuer- und/oder Regeleinrichtung (29) ausgebildet ist, die Leistung (P) des Bearbeitungsstrahls in dem Bearbeitungsfeld (8) und/oder die Vorschubgeschwindigkeit (v_{R}) anhand der mindestens einen von der Auswerteeinrichtung (28) bestimmten Temperatur (T_{P+4}, T_{P+3}, T_{P+2}, T_{P+1}, T_{P}, T_{P-1}, T_{P-2}, T_{P-3}, T_{P-4}) und/oder des Temperaturgradienten (ΔT) zu regeln.

16. Bearbeitungsmaschine (10) zum Herstellen von dreidimensionalen Bauteilen (11) durch Bestrahlen von Pulverschichten (12) mittels eines Bearbeitungsstrahls, insbesondere mittels eines Laserstrahls (3), wobei die Bearbeitungsmaschine (10) eine Bestrahlungseinrichtung (1) nach einem der vorhergehenden Ansprüche sowie eine Bearbeitungskammer (14) mit einem Träger (13) zum Aufbringen der Pulverschichten (12) aufweist.

## Claims

1. An irradiating device (1) for irradiating a machining field (8) with a machining beam, in particular with a laser beam (3), for carrying out a welding process, comprising:
a scanner device (4) for aligning the machining beam to a machining position (X_{P}, Yp) in the machining field (8),
a pyrometer (17),
an imaging device (9) for imaging a part-region (16) of the machining field (8) on the pyrometer (17), **characterized in that** the pyrometer has at least two pyrometer segments (20; 21a-d, 22a-d, 23a-d, 24a-d; 25),
wherein the imaging device (9) images thermal radiation (19) which emanates from the machining position (X_{P}, Y_{P}) in the machining field (8) on a first pyrometer segment (20), and wherein the imaging device (9) images thermal radiation (19) which emanates from at least one position (X_{P+4}, Y_{P}; X_{P+3}, Y_{P}; X_{P+2}, Y_{P}; X_{P+1}, Y_{P}; X_{P-1}, Y_{P}; X_{P-2}, Y_{P}; X_{P-3}, Y_{P}; X_{P-4}, Y_{P}) in the machining field (8) being situated ahead of or behind the machining position (X_{P}, Y_{P}) along an advancing direction (v_{R}) of the machining beam in the machining field (8) on at least one second pyrometer segment (21a-d, 22a-d, 23a-d, 24a-d; 25), wherein the first pyrometer segment (20) and/or the second pyrometer segment (21a-d, 22a-d, 23a-d, 24a-d; 25) have/has at least one curved external edge (27a,b).

2. The irradiating device according to claim 1, wherein the first pyrometer segment (20) and the at least one second pyrometer segment (21a-d, 22a-d, 23a-d, 24a-d; 25) are formed on the surface (17a) of a structured diode (17) or are connected to a respective detector, in particular to a diode (32, 32a, 32b, ...), by way of a respective radiation transporting device (31, 31a, 31b, ...).

3. The irradiating device according to claim 1 or 2, furthermore comprising a filter device (26) for the in particular wavelength-dependent attenuation of the thermal radiation (19) that emanates from the machining field (8), said filter device (26) being disposed between the machining field (8) and the first pyrometer segment (20) and/or at least one second pyrometer segment (21a-d, 22a-d, 23a-d, 24a-d; 25).

4. The irradiating device according to claim 2 or 3, wherein at least two of the pyrometer segments (20, 21a-d, 22a-d, 23a-d, 24a-d; 25) on the surface (17a) of the structured diode (17), or at least two of the detectors (32, 32a, 32b, ...) that are connected to different pyrometer segments (20, 21a,b, 22a,b, 23a,b, 24a,b) by way of a respective radiation transporting device (31, 31a, 31b, ...), have a different wavelength-dependent sensitivity in relation to the thermal radiation (19) which emanates from the machining field (8).

5. The irradiating device according to claim 4, wherein the first pyrometer segment (20) of the structured diode (17), or the detector (32) which is connected to the first pyrometer segment (20), has a maximum sensitivity at a maximum wavelength (λ_{1MAX}) which is less than the maximum wavelength (λ_{2MAX}) of at least one of the second pyrometer segments (21a-d, 22a-d, 23a-d, 24a-d; 25) of the structured diode (17), or of at least one detector (32a, 32b) which is connected to a second pyrometer segment (21a, 21b).

6. The irradiating device according to one of the preceding claims, wherein the first pyrometer segment (20) and/or the second pyrometer segment (21a-d, 22a-d, 23a-d, 24a-d; 25) have/has at least one arcuate external edge (27a,b).

7. The irradiating device according to one of the preceding claims, wherein the first pyrometer segment (20) is circular.

8. The irradiating device according to one of the preceding claims, which has at least two second pyrometer segments which are configured as annular segments (21a-d, 22a-d, 23a-d, 24a-d; 25).

9. The irradiating device according to claim 8, wherein the second pyrometer segments which are configured as annular segments (21a-d, 22a-d, 23a-d, 24a-d; 25) are disposed so as to be rotationally symmetrical about the first pyrometer segment (20).

10. The irradiating device according to one of claims 8 or 9, wherein the second pyrometer segments (21a-d, 22a-d, 23a-d, 24a-d; 25) are disposed in a plurality of concentric rings (R1 bis R4; R1 bis R5; R1 bis R3).

11. The irradiating device according to one of the preceding claims, wherein the pyrometer (17) is disposed in an observation beam path (3a) which runs so as to be coaxial with the machining beam (3).

12. The irradiating device according to one of the preceding claims, furthermore comprising an open-loop and/or closed-loop control device (29) for predefining the advancing direction (v_{R}) in the movement of the machining beam across the machining field (8).

13. The irradiating device according to claim 12, furthermore comprising an evaluation device (28) which by means of the predefined advancing direction (v_{R}) is configured for identifying second pyrometer segments (21a, 22a, 23a, 24a, 25a) which are disposed ahead of the machining position (Xp, Yp) in the advancing direction (v_{R}) and second pyrometer segments (21c, 22c, 23c, 24c, 25c) which are disposed behind the machining position (X_{P} , Y_{P}) in the advancing direction (v_{R}).

14. The irradiating device according to claim 13, wherein the evaluation device (28) is configured for determining a temperature (T_{P}) at the machining position (X_{P}, Y_{P}), a temperature (T_{P+4}, T_{P+3}, T_{P+2}, T_{P+1}; T_{P-1}, T_{P-2}, T_{P-3}, T_{P-4}) at a position (X_{P+4}, Y_{P}; X_{P+3}, Y_{P}; X_{P+2}, Y_{P}; X_{P+1}, Y_{P}) in the machining field (8) ahead of the machining position (Xp, Yp) and/or at a position (X_{P-1}, Y_{P}; X_{P-2}, Y_{P}; X_{P-3}, Y_{P}; X_{P-4}, Yp) in the machining field (8) behind the machining position(X_{P}, Y_{P}), and preferably for determining at least one temperature gradient (ΔT) by means of at least two of the temperatures (T_{P+4}, TP+3).

15. The irradiating device according to claim 14, wherein the open-loop and/or closed-loop control device (29), by means of the at least one temperature (T_{P+4}, T_{P+3}, T_{P+2}, T_{P+1}, T_{P}, T_{P-1}, T_{P-2}, T_{P-3}, T_{P-4}) determined by the evaluation device (28) and/or of the temperature gradient (ΔT), is configured for regulating the output (P) of the machining beam in the machining field (8) and/or the advancing speed (v_{R}).

16. A machine tool (10) for producing three-dimensional components (11) by irradiating powder layers (12) by means of a machining beam, in particular by means of a laser beam (3), wherein the machine tool (10) has an irradiating device (1) as claimed in one of the proceeding claims, as well as a machining chamber (14) having a support (13) for applying the powder layers (12).

## Revendications

1. Dispositif d'irradiation (1) conçu pour exposer un champ de façonnage (8) à un rayonnement de façonnage et notamment à un faisceau laser (3), en vue de l'exécution d'un processus de soudage, comprenant :
un dispositif (4) de balayage exploratoire, destiné à orienter le rayonnement de façonnage vers un emplacement de façonnage (X_{P}, Y_{P}) dans le champ de façonnage (8),
un pyromètre (17),
un dispositif d'imagerie (9) destiné à reproduire l'image d'une région partielle (16) dudit champ de façonnage (8) sur ledit pyromètre (17),
**caractérisé par le fait que** le pyromètre comporte au moins deux segments (20 ; 21a-d, 22a-d, 23a-d, 24a-d ; 25),
sachant que le dispositif d'imagerie (9) reproduit, sur un premier segment (20) du pyromètre, l'image d'un rayonnement thermique (19) émanant de l'emplacement de façonnage (X_{P}, Y_{P}) dans le champ de façonnage (8), et sachant que ledit dispositif d'imagerie (9) reproduit, sur au moins un second segment (21a-d, 22a-d, 23a-d, 24a-d ; 25) dudit pyromètre, un rayonnement thermique (19) émanant, dans ledit champ de façonnage (8), d'au moins un emplacement (X_{P+4},Y_{P}; X_{P+3},Y_{P}; X_{P+2},Y_{P}; X_{P+1},Y_{P}; X_{P-1},Y_{P}; X_{P-2},Y_{P}; X_{P-3},Y_{P}; X_{P-4},Y_{P}), situé devant ou derrière ledit emplacement de façonnage (X_{P}, Y_{P}) le long d'une direction d'avance (VR) du rayonnement de façonnage dans ledit champ de façonnage (8), ledit premier segment (20) du pyromètre, et/ou ledit second segment (21a-d, 22a-d, 23a-d, 24a-d ; 25) dudit pyromètre, étant doté(s) d'au moins une arête extérieure (27a, b) curviligne.

2. Dispositif d'irradiation selon la revendication 1, dans lequel le premier segment (20) du pyromètre et le second segment (21a-d, 22a-d, 23a-d, 24a-d ; 25) à présence minimale sur ledit pyromètre, sont formés au niveau de la surface (17a) d'une diode structurée (17), ou bien sont en liaison avec un détecteur respectif, notamment avec une diode (32, 32a, 32b,...), par l'intermédiaire d'un dispositif respectif (31, 31a, 31b,...) d'acheminement de rayonnements.

3. Dispositif d'irradiation selon la revendication 1 ou 2, comprenant en outre :
un dispositif de filtrage (26) interposé entre le champ de façonnage (8) et le premier segment (20) du pyromètre, et/ou le second segment (21a-d, 22a-d, 23a-d, 24a-d ; 25) à présence minimale sur ledit pyromètre en vue d'affaiblir, notamment d'une manière tributaire de la longueur d'onde, le rayonnement thermique (19) émanant dudit champ de façonnage (8).

4. Dispositif d'irradiation selon la revendication 2 ou 3, dans lequel au moins deux segments, au sein des segments (20, 21a-d, 22a-d, 23a-d, 24a-d ; 25) du pyromètre situés au niveau de la surface (17a) de la diode structurée (17), voire au moins deux détecteurs, au sein des détecteurs (32, 32a, 32b,...) raccordés à différents segments (20, 21a-b, 22a-b, 23a-b, 24a-b) dudit pyromètre par l'intermédiaire d'un dispositif respectif (31, 31a, 31b,...) d'acheminement de rayonnements, présentent une sensibilité différente au rayonnement thermique (19) émanant du champ de façonnage (8), d'une manière tributaire de la longueur d'onde.

5. Dispositif d'irradiation selon la revendication 4, dans lequel le premier segment (20) du pyromètre sur la diode structurée (17), ou le détecteur (32) raccordé audit premier segment (20) dudit pyromètre, est doué d'une sensibilité maximale en présence d'une longueur d'onde maximale (λ_{1MAX}) inférieure à la longueur d'onde maximale (λ_{2MAX}) d'au moins l'un des seconds segments (21a-d, 22a-d, 23a-d, 24a-d ; 25) du pyromètre sur ladite diode structurée (17), ou d'au moins un détecteur (32a, 32b) raccordé à un second segment (21a, 21b) dudit pyromètre.

6. Dispositif d'irradiation selon l'une des revendications précédentes, dans lequel le premier segment (20) du pyromètre, et/ou le second segment (21a-d, 22a-d, 23ad, 24a-d ; 25) dudit pyromètre, est (sont) pourvu(s) d'au moins une arête extérieure (27a, b) en arc de cercle.

7. Dispositif d'irradiation selon l'une des revendications précédentes, dans lequel le premier segment (20) du pyromètre est de forme circulaire.

8. Dispositif d'irradiation selon l'une des revendications précédentes, comptant au moins deux seconds segments du pyromètre réalisés sous la forme de segments annulaires (21a-d, 22a-d, 23a-d, 24a-d ; 25).

9. Dispositif d'irradiation selon la revendication 8, dans lequel les seconds segments du pyromètre, réalisés en tant que segments annulaires (21a-d, 22a-d, 23a-d, 24a-d ; 25), sont agencés avec symétrie rotatoire autour du premier segment (20) dudit pyromètre.

10. Dispositif d'irradiation selon l'une des revendications 8 ou 9, dans lequel les seconds segments (21a-d, 22a-d, 23a-d, 24a-d; 25) du pyromètre sont agencés en plusieurs anneaux concentriques (R1 à R4 ; R1 à R5 ; R1 à R3).

11. Dispositif d'irradiation selon l'une des revendications précédentes, dans lequel le pyromètre (17) est implanté sur un trajet de rayonnement d'observation (3a) s'étendant coaxialement au rayonnement de façonnage (3).

12. Dispositif d'irradiation selon l'une des revendications précédentes, comprenant en outre : un dispositif (29) de commande et/ou de régulation, conçu pour préétablir la direction d'avance (VR) au cours du mouvement du rayonnement de façonnage en surplomb du champ de façonnage (8).

13. Dispositif d'irradiation selon la revendication 12, comprenant en outre : un dispositif d'évaluation (28) réalisé en vue d'identifier, à l'appui de la direction d'avance (VR) préétablie, des seconds segments (21a, 22a, 23a, 24a, 25a) du pyromètre situés devant l'emplacement de façonnage (X_{P}, Y_{P}) dans la direction d'avance (VR), et des seconds segments (21c, 22c, 23c, 24c, 25c) dudit pyromètre situés derrière ledit emplacement de façonnage (X_{P}, Y_{P}) dans ladite direction d'avance (VR).

14. Dispositif d'irradiation selon la revendication 13, dans lequel le dispositif d'évaluation (28) est réalisé en vue de déterminer une température (T_{P}) régnant à l'emplacement de façonnage (X_{P}, Y_{P}), une température (T_{P+4}, T_{P+3}, T_{P+2}, T_{P+1}; T_{P-1}, T_{P-2}, T_{P-3}, T_{P-4}) régnant en un emplacement (X_{P+4},Y_{P}; X_{P+3},Y_{P}; X_{P+2},Y_{P}; X_{P+1},Y_{P}) situé devant l'emplacement de façonnage (X_{P}, Y_{P}) dans le champ de façonnage (8) et/ou en un emplacement (X_{P-1},Y_{P}; X_{P-2},Y_{P}; X_{P-3},Y_{P}; X_{P-4},Y_{P}) situé derrière ledit emplacement de façonnage (X_{P}, Y_{P}) dans ledit champ de façonnage (8) et, de préférence, en vue de déterminer au moins un gradient thermique (ΔT) sur la base d'au moins deux températures (T_{P+4}, T_{P+3}), au sein desdites températures.

15. Dispositif d'irradiation selon la revendication 14, dans lequel le dispositif (29) de commande et/ou de régulation est réalisé en vue de réguler la puissance (P) du rayonnement de façonnage dans le champ de façonnage (8) et/ou la vitesse d'avance (VR), sur la base de la température (T_{P+4}, T_{P+3}, T_{P+2}, T_{P+1}, T_{P}, T_{P-1}, T_{P-2}, T_{P-3}, T_{P-4}) à présence minimale, déterminée par le dispositif d'évaluation (28), et/ou sur la base du gradient thermique (ΔT).

16. Machine de façonnage (10) dévolue à la fabrication de pièces structurelles tridimensionnelles (11) par irradiation de couches de poudre (12) au moyen d'un rayonnement de façonnage, notamment au moyen d'un faisceau laser (3), ladite machine de façonnage (10) étant pourvue d'un dispositif d'irradiation (1) conforme à l'une des revendications précédentes, ainsi que d'une chambre de traitement (14) comportant un support (13) affecté au dépôt desdites couches de poudre (12).
